# EUROPEAN PATENT SPECIFICATION

(11) **EP 3 951 063 B1**
(45) Date of publication and mention of the grant of the patent: **28.10.2026**
(21) Application number: 20778367.1
(22) Date of filing: 27.03.2020
(51) Int. Cl.: A01G 20/47, E01H 1/08

(54) **GARDEN BLOWER**
GARTENGEBLÄSE
SOUFFLEUR DE JARDIN

(30) Priority: 27.03.2019 CN 201910238598
(43) Date of publication of application: 09.02.2022
(60) Divisional application: 26205800.1
(73) Proprietor: Positec Power Tools (Suzhou) Co., Ltd., Suzhou, Jiangsu 215123 (CN)
(72) Inventor: LIU, Zhengwei, Suzhou, Jiangsu 215123 (CN); JIAO, Shiping, Suzhou, Jiangsu 215123 (CN); XIAO, Haibo, Suzhou, Jiangsu 215123 (CN); YU, Xuefeng, Suzhou, Jiangsu 215123 (CN); YANG, Qinghui, Suzhou, Jiangsu 215123 (CN)
(74) Representative: Mishcon de Reya LLP
(86) International application number: PCT/CN2020/081615
(87) International publication number: WO 2020/192753

(56) References cited:
- EP-A2- 0 821 872
- WO-A2-2012/136906
- CN-A- 105 442 478
- CN-A- 106 149 603
- CN-A- 108 071 091
- CN-A- 108 476 871
- CN-A- 108 684 444
- CN-A- 108 925 542
- CN-U- 207 647 806
- DE-A1- 102007 037 011
- US-A- 6 105 206
- US-B1- 8 510 910

## Description

### CROSS-REFERENCE TO RELATED APPLICATIONS

This application claims priority to Chinese Patent Application No. 201910238598.0, filed on March 27, 2019.

### BACKGROUND

### Technical Field

The present invention relates to a garden blower.

### Related Art

The weight of a garden blower is supported by a user. When the user holds the garden blower to perform a cleaning operation, the distance between the garden blower and foreign objects on the ground, the angle between the garden blower and the ground, and an amplitude at which the garden blower is a swung left and right for blowing and sweeping are all determined by a manner in which the user holds the garden blower. Because the garden blower is basically held by a user for operation, how to minimize the weight of the garden blower has long been a subject for researchers to continuously study. The reduction in the weight of the blower needs to achieved by minimizing the weights of components of the garden blower, and a motor is one of the main heavy bodies of the garden blower.

The problem faced by the existing garden blowers on the market is the contradiction in achieving a light weight and high working performance at the same time. Specifically, to minimize the weight of the garden blower as much as possible, a lightweight motor with a small volume needs to be used. However, to adapt to high requirements on the working performance of the garden blower (air blowing volume and air blowing speed) under moderate and heavy working conditions, the output power of the motor generally needs to reach 600 W to 1000 W or even higher. To achieve such a power output, the motor inevitably needs to have a heavy weight and a large volume.

To overcome this problem, one method is to use an engine (gasoline)-driven backpack blower for heavy working conditions requiring high performance, and provide a lightweight hand-held garden blower for light working conditions. This solution is disadvantageous in that on the one hand, the user needs to be additionally equipped with a garden blower specially designed for moderate and heavy working conditions, and such a garden blower has a heavy weight and a large volume, is inconvenient to swing left and right, and is troublesome to operate (the user needs to drive the engine first and then carry the blower on his/her back); and on the other hand, the engine-driven blower is usually noisy during operation, and is energized by gasoline, which is likely to cause air pollution, is not environmentally friendly, and is not favored in the industry. Therefore, it is necessary to improve the existing technical means.

DE102007037011A1 discloses a manual leaf blower that has handgrips mounted between a motor unit and a blower nozzle. The handgrips are mounted on a guide tube, through which a fan drive shaft runs and which is at least half as long as the nozzle.

### SUMMARY

To overcome disadvantages in the prior art, a problem to be resolved by embodiments of the present disclosure is to provide a garden blower having a light weight and a small size, and meeting performance requirements.

An aspects of an invention is set out in claim 1. Optional features of embodiments are set out in the dependent claims.

### BRIEF DESCRIPTION OF THE DRAWINGS

The foregoing objectives, technical solutions, and beneficial effects of the present invention can be clearly obtained through the following detailed description of specific embodiments, which can implement the present invention in combination with the description of accompanying drawings.

Same reference numerals and symbols in the accompanying drawings and the specification are used for representing same or equivalent elements.
FIG. 1 is a schematic structural diagram of an electric tool according to the present invention;
FIG. 2 is a schematic structural diagram of a motor applied to an electric tool;
FIG. 3 is a schematic structural diagram of a garden blower according to the present invention, where an operating handle is located above an extension rod;
FIG. 4 is a schematic structural diagram of the garden blower shown in FIG. 3 additionally provided with a battery pack mounting portion, where the battery pack mounting portion is combined with a battery pack;
FIG. 5 is a structural exploded view of the garden blower shown in FIG. 3;
FIG. 6 is a cross-sectional view of the garden blower shown in FIG. 3 additionally provided with a battery pack mounting portion, a configuration of which is different from that in FIG. 4;
FIG. 7 is a schematic structural diagram illustrating that the garden blower shown in FIG. 3 is powered by a backpack battery pack;
FIG. 8 is a schematic structural diagram of a garden blower according to the present invention, where an operating handle is located on an extension rod;
FIG. 9 is a cross-sectional view of the garden blower shown in FIG. 8 additionally provided with a battery pack mounting portion, where the battery pack mounting portion is combined with a battery pack;
FIG. 10 is a cross-sectional view of the garden blower shown in FIG. 8, where a control switch is disposed on the operating handle;
FIG. 11 is a schematic structural diagram of the garden blower shown in FIG. 3 from which an auxiliary air blowing tube has been removed;
FIG. 12 is a schematic structural diagram of the garden blower shown in FIG. 11 additionally provided with a battery pack mounting portion, where the battery pack mounting portion is combined with a battery pack;
FIG. 13 is a schematic structural diagram illustrating that the garden blower shown in FIG. 11 is powered by a backpack battery pack;
FIG. 14 is a schematic diagram illustrating that a user holds the garden blower shown in FIG. 3;
FIG. 15 is a schematic diagram illustrating that a user holds the garden blower shown in FIG. 8;
FIG. 16 is a schematic diagram illustrating that a user holds a conventional garden blower;
FIG. 17 is a schematic diagram of an implementation of a mounting position of a control board in a garden blower according to the present invention;
FIG. 18 is a schematic diagram of another implementation of a mounting position of a control board in a garden blower according to the present invention; and
FIG. 19 is a comparison diagram of ratios of maximum output powers of a coreless motor, a brushless direct current outer rotor motor, a brushless direct current inner rotor motor, and an alternating current brush motor to a bare machine weight of a garden blower.

### DETAILED DESCRIPTION

The following describes exemplary embodiments of the present invention in detail with reference to the accompanying drawings, so that the advantages and features of the present invention can be more easily understood by a person skilled in the art, thereby establishing the protection scope of the present invention, as defined in the appended claims, more clearly and explicitly. The following implementations may be appropriately combined with each other. Same reference numerals and symbols in the accompanying drawings and different embodiments of the specification are used for representing same or equivalent elements.

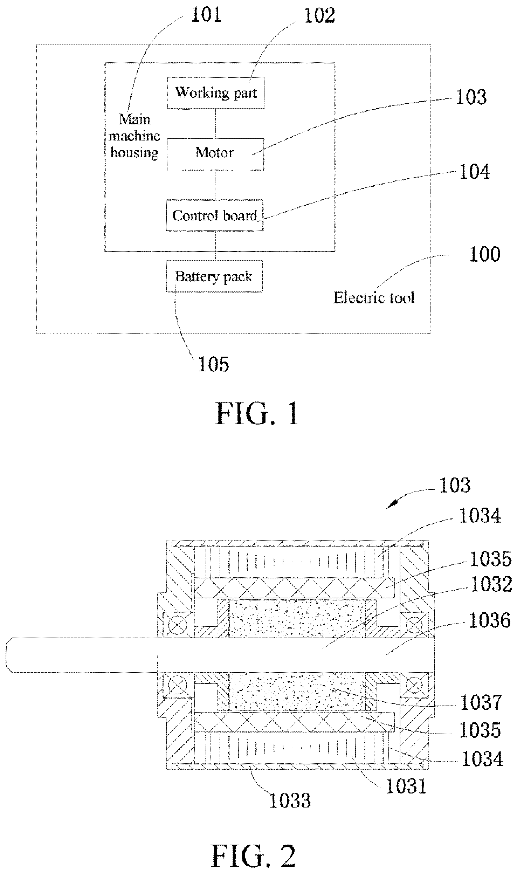

FIG. 1 exemplarily shows an electric tool 100, which includes: a main machine housing 101; a working part 102 configured to perform work, where the working part 102 can be accommodated in the main machine housing 101 or supported by the main machine housing 101; and a power apparatus, configured to drive the working part 102 to move.

A configuration manner of the power apparatus is that: the power apparatus includes a motor 103 configured to provide a driving force for the electric tool 100, a control board 104 configured to control the motor 103 to rotate, and a direct current power supply configured to supply power to the motor 103. Preferably, the direct current power supply may be a rechargeable battery pack 105. Specifically, the battery pack is a lithium battery pack. The battery pack is detachably mounted on the main machine housing 101. There may be one or two or more battery packs 105. The battery pack 105 can supply power for at least two different types of direct current tools. For example, the battery pack may be universal for electric tools such as a garden blower, a trimmer, a lawn mower, a chainsaw, pruner, an angle grinder, an electric hammer, or an electric drill. In this way, a user may only purchase a bare machine of the garden blower, and use a battery pack on another existing electric tool to power the garden blower, so as to achieve energy sharing of a plurality of tools, which, on the one hand, is beneficial to universality of a battery pack platform, and on the other hand, reduces purchase costs for the user.

For the field of electric tools, most electric tools need to be held by users for a long time for operation. Therefore, it is important to suppress maximization of weights of electric tools. Currently, if an electric tool on the market achieves a light weight, it is difficult for the electric tool to achieve relatively good working performance, and conversely, if an electric tool on the market achieves good working performance, it is difficult for the electric tool to achieve a light weight. This application provides motor 103. Referring to FIG. 2, the motor 103 includes a stator 1031 and a rotor 1032. The stator 1031 includes a casing 1033, a stator lamination stack 1034, and a winding coil 1035. The stator lamination stack 1034 includes a plurality of annular magnetic conductive sheets. The rotor 1032 includes a rotating shaft 1036 accommodated inside the winding coil 1035 and a magnetic ring 1037 disposed on a periphery of the rotating shaft 1036. The motor 103 is applied to the electric tool 100, so that both a light weight and working performance can be taken into consideration.

Specifically, a rotational speed of the motor 103 is configured to be higher than 35000 rpm and lower than or equal to 120000 rpm. Within the rotational speed range, a ratio of a maximum output power of the motor 103 to a weight of the motor is not less than 2200 W/kg, and a ratio of the maximum output power of the motor 103 to a volume of the motor 103 is not less than 0.033 W/mm³. Preferably, the rotational speed of the motor 103 is configured to be higher than or equal to 45000 rpm and lower than or equal to 100000 rpm, and the ratio of the maximum output power of the motor 103 to the volume of the motor is not less than 0.037 W/mm³. Specifically, in a case that the rotational speed of the motor 103 is 60000 rpm, when the maximum output power of the motor 103 is 1000 W, the weight of the motor 103 is 0.3 kg, the volume of the motor is 27x10³ mm³, the ratio of the maximum output power of the motor 103 to the weight of the motor 103 is approximately 3333 W/kg, and the ratio of the maximum output power of the motor 103 to the volume of the motor 103 is approximately 0.037 W/mm³; and when the maximum output power of the motor 103 is 1200 W, the weight of the motor 103 is 0.3 kg, the volume of the motor is 27x10³ mm³, the ratio of the maximum output power of the motor 103 to the weight of the motor 103 is 4000 W/kg, and the ratio of the maximum output power of the motor 103 to the volume of the motor 103 is approximately 0.044 W/mm³.

The rotational speed of the motor 103 may be set to 36000 rpm, 40000 rpm, 45000 rpm, 48000 rpm, 52000 rpm, 55000 rpm, 58000 rpm, 60000 rpm, 62000 rpm, 65000 rpm, 70000 rpm, 75000 rpm, 82000 rpm, 85000 rpm, 90000 rpm, 95000 rpm, 98000 rpm, or 100000 rpm.

The maximum output power of the motor 103 is within a range of 600 W to 1600 W, so that the maximum output power may be set to 700 W, 750 W, 800 W, 850 W, 900 W, 950 W, 1000 W, 1050 W, 1100 W, 1150 W, 1200 W, 1250 W, 1350 W, 1450 W, 1500 W, 1550 W, or the like. The weight of the motor 103 is within a range of 0.2 kg to 0.4 kg. Therefore, the weight of the motor 103 may be set to 0.25 kg, 0.26 kg, 0.27 kg, 0.28 kg, 0.29 kg, 0.30 kg, 0.3.1 kg, 0.32 kg, 0.33 kg, 0.34 kg, or 0.35 kg. The volume of the motor 103 is within a range of not greater than 40x10³ mm³. Therefore, the volume of the motor 103 may be set to 39x10³ mm³, 35x10³ mm³, 34x10³ mm³, 33x10³ mm³, 32x10³ mm³, 31x10³ mm³, 30x10³ mm³, 29x10³ mm³, 28x10³ mm³, or 27x10³ mm³. A diameter of the motor 103 is not greater than 45 mm. Preferably, the diameter of the motor may be configured to be 36 mm to 45 mm. Therefore, the diameter of the motor 103 may be set to 36 mm, 37 mm, 38 mm, 39 mm, 40 mm, 41 mm, 42 m, 43 mm, or 44 mm.

Preferably, in a manner in which a ratio of the maximum output power of the motor 103 to the weight of the motor 103 is not less than 2500 W/kg, the rotational speed of the motor 103 is configured to be higher than or equal to 45000 rpm and lower than or equal to 80000 rpm, the maximum output power of the motor 103 is configured to be 600 W to 1300 W, the weight of the motor 103 is configured to be 0.25 kg to 0.35 kg, the diameter of the motor 103 is configured to be 36 to 45 mm, and the volume of the motor 103 is configured to be a specification that does not exceed 60x10³ mm³.

Further, when the rotational speed of the motor 103 is configured to be 50000 rpm to 60000 rpm, the motor can be constructed to have a maximum output power of 700 W to 1300 W, the weight of the motor is 0.25 kg to 0.32 kg, the diameter of the motor is 38 mm to 42 mm, and the volume of the motor is a specification not greater than 40x10³ mm³.

It should be noted that the volume of the motor 103 is equal to *π* x R² x L, where *π* is the pi, R is a radius of the stator lamination stack 1034, and L is a length of the stator lamination stack 1034. For example, in this implementation, the length of the stator lamination stack 1034 is 24 mm, and a diameter of the stator lamination stack 1034 is 38 mm, where *π* is 3.14. The volume of the motor 103 is approximately equal to 27x10³ mm³.

When the motor 103 is applied to the electric tool 100, and the motor 103 provides a rotational speed higher than 35000 rpm and lower than or equal to 120000 rpm, it is given that a corresponding ratio of the maximum output power of the motor 103 of the electric tool to a weight of the electric tool is not less than 250 W/kg. Specifically, when the rotational speed of the motor 103 is higher than or equal to 45000 rpm and lower than or equal to 80000 rpm, it is given that the corresponding ratio of the maximum output power of the motor 103 of the electric tool to the weight of the electric tool is not less than 300 W/kg. The weight of the electric tool is a bare machine weight, and for a direct current-powered electric tool, the bare machine herein means that no power supply is combined with the tool. Specifically, the power supply is a lithium battery pack. Certainly, another corresponding solution may be that the electric tool is alternating current (AC)-powered, and the bare machine refers to the entire tool.

Further, when the battery pack 105 is combined with the electric tool, and outputs energy for the motor, a ratio of the maximum output power of the motor 103 to the total weight of the electric tool in which the battery pack 105 is mounted is not less 170 W/kg. In this case, the rotational speed of the motor 103 may be configured to be higher than 35000 rpm and lower than or equal to 80000 rpm, and a nominal output voltage of 18 V to 56 V and a capacity of 1.5 Ah to 5 Ah are adopted as specifications of the battery pack 105. Therefore, within the rotational speed range of the motor 103, the ratio of the maximum output power of the motor 103 to the total weight of the electric tool 100 in which the battery pack 105 is mounted may be 240 W/kg, 250 W/kg, 260 W/kg, 280 W/kg, 300 W/kg, 350 W/kg, 375 W/kg, 400 W/kg, 420 W/kg, 450 W/kg, 480 W/kg, or 500 W/kg. Specifically, the ratio of the maximum output power of the motor 103 to the total weight of the electric tool in which the battery pack 105 is mounted is not less than 240 W/kg. In this case, the rotational speed of the motor 103 may be configured to be higher than 40000 rpm and lower than or equal to 80000 rpm, and a nominal output voltage of 18 V to 56 V and a capacity of 1.5 Ah to 5 Ah are adopted as the specifications of the battery pack 105.

Further, when the nominal output voltage of the battery pack is 40 V to 56 V, and the capacity thereof is 2 Ah to 5 Ah, because a weight of the battery pack is proportional to the capacity of the battery pack, the quantity of battery packs 105 combined with the electric tool 100 is preferably one. When the nominal output voltage of the battery pack is less than 40 V and greater than or equal to 18 V, and the capacity of the battery pack is 1.5 Ah to 4 Ah, the quantity of battery packs combined with the electric tool is preferably two.

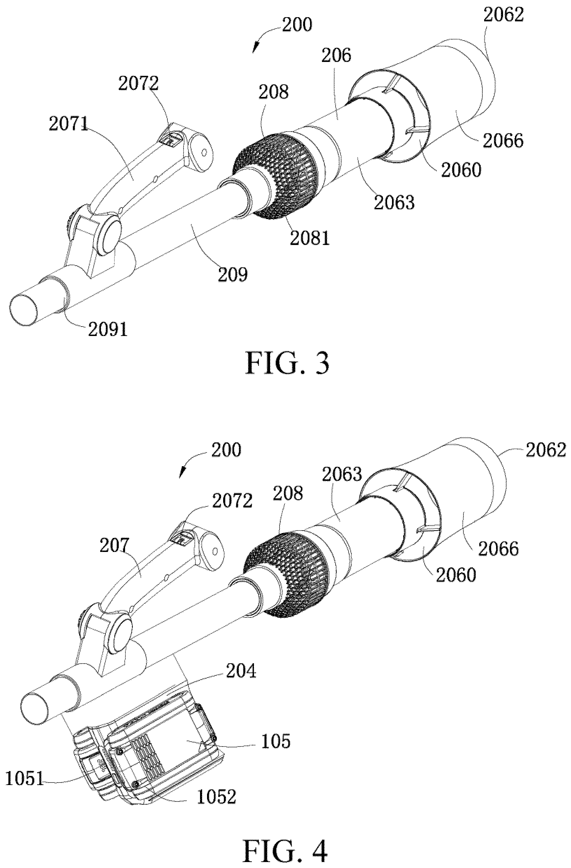

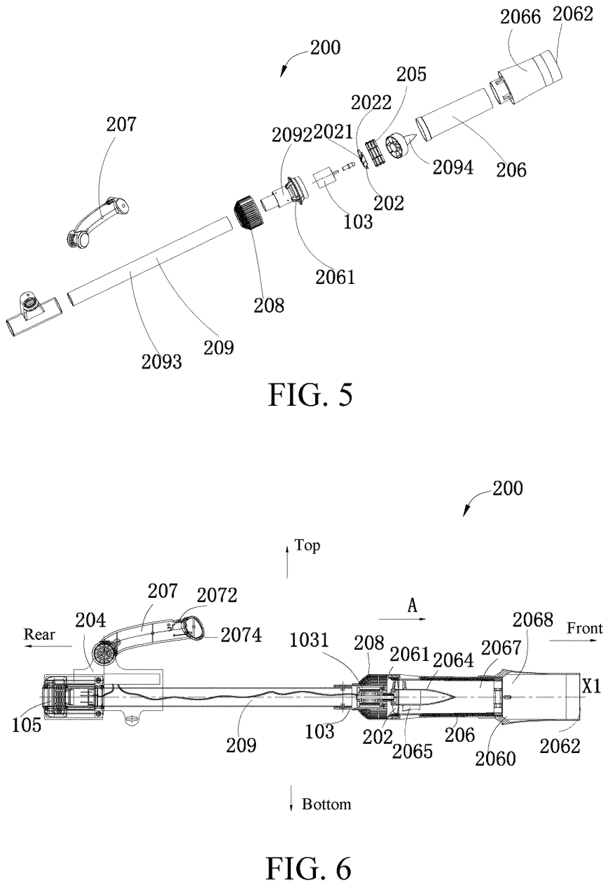

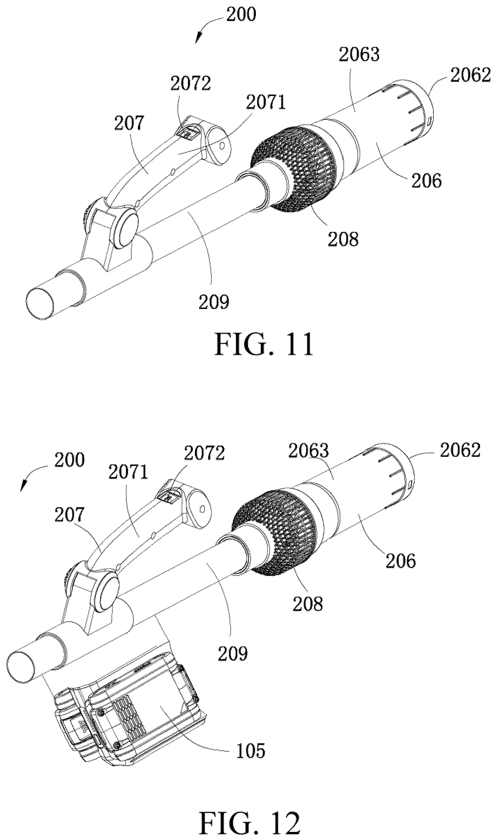

In a specific implementation, a garden blower 200 is used as an example of the electric tool 100, and this implementation is described by mainly using an example in which the motor 103 with a high output power, a small volume, and a small diameter is applied to the garden blower 200. Different garden blower structures are denoted by same reference numerals in this application. The garden blower 200 shown in FIG. 3 to FIG. 13 can concentrate scattered foreign objects. The foreign objects herein may be understood as leaves or garbage. In the present invention, for ease of understanding, as shown in FIG. 6, a direction in which an airflow corresponding to an air outlet flows out is defined as the front (distal end), and a side into which an airflow corresponding to an air inlet flows is defined as the rear (proximal end). The top of the drawing is defined as the top, and the bottom of the drawing is defined as the bottom. A side outside the drawing is defined as a left side, and a side inside the drawing is defined as a right side. The foregoing definitions are only used for description, and should not be understood as a limitation to the present invention.

Specifically, as shown in FIG. 6, the garden blower 200 extends approximately longitudinally along a direction indicated by an arrow A between the proximal end (the rear) and the distal end (the front). The garden blower 200 includes a main machine housing 201, the motor 103, and a working part. The main machine housing 201 includes an air duct portion 206 approximately extending along a longitudinal direction (the direction indicated by the arrow A), an operating handle 207 provided for a user to hold, and an air inlet shield 208 connected to the air duct portion 206. The working part is a fan 202 disposed inside the air duct portion 206. The motor 103 is connected to the fan 202 and drives the fan 202 to rotate, so that the fan 202 rotates around a fan axis X1, to drive air to form a moving airflow. It should be noted that the "proximal end" in this application should be construed as an end close to the user when the user uses the garden blower 200 to perform a cleaning operation; and the "distal end" in this application is construed as an end far away from the user in the longitudinal direction.

The air duct portion 206 is specifically a hollow tubular body, and is provided with an air inlet 2061 and an air outlet 2062 that are in communication with the outside respectively on two opposite ends of the air duct portion. It may be understood that being hollow means that air can smoothly flow between the air inlet 2061 and the air outlet 2062. Referring to FIG. 3 to FIG. 13, the air duct portion 206 includes a main air blowing tube 2063 approximately extending along a longitudinal direction. There may be one and only one air tube in the main air blowing tube 2063. Certainly, the main air blowing tube 2063 may alternatively be an air blowing tube with a complete air blowing function formed by two or more tubes combined together. The two or more tubes may be fixedly connected by a fixing element.

The operating handle 207 includes a holding portion 2071 provided for an operator to hold and a control switch 2072 mounted on the operating handle 207 and provided for the operator to touch with a finger. The control switch 2072 is electrically connected to the motor 103, to control on and off of the motor 103. Preferably, the control switch 2072 may further control the rotational speed of the motor 103.

The fan is specifically an axial-flow fan 202. The axial-flow fan 202 may be made of a fiber composite material structure, an aluminum metal structure, or a magnesium metal structure. The axial-flow fan 202 includes a hub 2021 and blades 2022 circumferentially arranged on a periphery of the hub 2021. The blades 2022 of the axial-flow fan 202 rotate around the fan axis X1 to form a rotation plane. In this implementation, the rotation plane is perpendicular to the fan axis X1.

The air inlet shield 208 is connected to the air inlet 2061 of the air duct portion 206. Specifically, for ease of cleaning of the air duct portion, the air inlet shield 208 is detachably connected to the air inlet 2061. The motor 103 can drive the axial-flow fan 202 to rotate to introduce external air into the air duct portion 206 through the air inlet shield 208. An airflow channel for air to flow through is formed between the air inlet shield 208 and the air outlet 2062.

Still referring to FIG. 6, FIG. 9, and FIG. 10, the garden blower 200 further includes a flow guiding structure disposed inside the main air blowing tube 2063. Specifically, the flow guiding structure includes a flow guiding cone 2064 disposed between the axial-flow fan 202 and the air outlet 2062 and configured to guide movement of an airflow, an outer cover (not indicated) configured to accommodate the flow guiding cone 2064, and eight stationary blades 2065 located between the flow guiding cone and the outer cover. For a hand-held tool, the user may experience arm fatigue when holding the tool for operation for a long time, especially for a hand-held tool operated with a single hand, the fatigue phenomenon is more obvious. As known to a person skilled in the art, the garden blower 200 is usually held for operation with a single hand. To reduce fatigue for the user during the operation and achieve a light weight of the garden blower 200, weights of components need to be reduced as much as possible.

FIG. 5 is a schematic exploded view of the garden blower 200 powered by a battery pack (not shown). With reference to FIG. 4 and FIG. 5, the garden blower 200 mainly includes four heavy units. The four heavy units are specifically: a first heavy unit: the main machine housing 201 (including the air duct portion 206 and the operating handle 207); a second heavy unit: functional components (including the motor 103 and the axial-flow fan 202) and the control board (not shown); a third heavy unit: the flow guiding structure (including the flow guiding cone 2064 and the stationary blades 2065); and a fourth heavy unit: the battery pack 105 configured to supply power to the motor 103. To reduce the weight of the garden blower 100, weights of the four heavy units need to be reduced as much as possible.

Cleaning working conditions encountered by the garden blower 100 mainly include: fallen leaves and small garbage on the outdoor ground of a home or on the ground of a park, debris between gaps of floor tiles, and wet leaves adhered to the ground. After investigation, to meet cleaning requirements for the foregoing working conditions, an air volume provided by the garden blower 100 usually needs to be not less than 300 cfm, and an air speed provided by the garden blower 100 needs to be not less than 130 mph. The problem encountered by the garden blower 200 on the market currently is that the light weights of the functional components weaken the working effect of the garden blower 100, resulting in reduction of a cleaning capability, and the light weight of the battery pack 105 shortens the running time of the garden blower 200. In a case that the weights of the functional components and the battery pack 105 are basically unchanged, reduction of weights of materials of the main machine housing 201 and the flow guiding structure will, on the one hand, affect the strength of the entire blower, and on the other hand, affect the working effect of the garden blower 200. Therefore, the contradictions and mutual restraints between a light weight and a better work effect have always been pain points for manufacturers. To take both the light weight and an air blowing effect of the blower into consideration, appropriate parameter configuration and structural optimization need to be performed for the structures of the motor 103, the battery pack 105, the axial-flow fan 202, and the air duct portion 206.

As is well known by a person skilled in the art, the working effect of the garden blower 200 mainly depends on the air volume and the air speed. The air volume and the air speed are mainly determined by an air blowing effect of the axial-flow fan 202 and the structure of the air duct portion 206. The air blowing effect of the axial-flow fan 202 is mainly determined by an air volume and an air pressure of the axial-flow fan 202.

The air volume of the axial-flow fan 202 is represented by a symbol Qₐᵢᵣ, which is mainly represented by the following formula: Qₐᵢᵣ=Q'×*π*/4×D²×V=148×Q'×D³×N, where Q' is a flow coefficient, and is related to a form of the fan of the blower; D is an outer diameter of the axial-flow fan; V is a circumferential speed of a periphery of the axial-flow fan; and N is the rotational speed of the axial-flow fan. Therefore, in the same form of the fan (that is, Q' is constant), and at the air volume of the axial-flow fan that is kept unchanged, the rotational speed of the axial-flow fan 202 is approximately inversely proportional to the cube of a diameter of the axial-flow fan 202.

The air pressure of the axial-flow fan 202 is a difference between a total pressure of an airflow on an air outlet side of the axial-flow fan 202 and a total pressure of an airflow on an air inlet side of the axial-flow fan 202, is represented by a symbol H, and is mainly expressed by the following formula: H=ρ×h×D²×N², where ρ is the density of air; h is a pressure coefficient and is generally related to the form of the fan; D is the outer diameter of the axial-flow fan 202; and N is the rotational speed of the axial-flow fan 202. Therefore, under the same form of the fan and when the same air pressure is kept, the rotational speed of the axial-flow fan 202 is approximately inversely proportional to the diameter of the axial-flow fan 202.

To maximize the performance of the motor 103 with a high output power, a small volume, a small diameter, a light weight, and a high rotational speed, and improve the working effect of the garden blower 200, in this embodiment, the motor 103 directly transfers power to the axial-flow fan 202, and to reduce a power loss, a rotation axis of the motor 103 and the fan axis X1 of the axial-flow fan 202 basically coincide. According to the foregoing analysis and actual experimental demonstration by the research and development personnel, a higher rotational speed of the motor 103 indicates a smaller diameter of the axial-flow fan 202. Therefore, the motor 103 with a high output power, a small volume, a small diameter, and a high rotational speed can achieve a light weight of the garden blower 200, and the size of the axial-flow fan 202 driven by the motor 103 can also be significantly reduced. The weight of the axial-flow fan 202 is also reduced, and the corresponding air duct portion 206 surrounding the periphery of the axial-flow fan 202 can also be designed to be smaller in size and lighter in weight than the existing garden blower 200 on the market.

Further, it can be learned from the above formula that when the diameter D of the axial-flow fan 202 has relatively large impact on the air volume Qₐᵢᵣ of the axial-flow fan 202 and the air pressure H of the axial-flow fan 202, and compared with the rotational speed N of the axial-flow fan 202, the diameter D of the axial-flow fan 202 has greater impact on the air volume Qₐᵢᵣ. Therefore, to maintain that both the air volume and the air pressure can meet normal requirements of the garden blower 200, the diameter of the axial-flow fan 202 needs to be configured at an appropriate value. The configuration of the motor 103 affects the diameter of the axial-flow fan 202.

Furthermore, to design a fluid product, a flow (Q) and a dynamic pressure P_{dynamic}=1/2ρv² need to be first determined, where Q may be approximately understood as a target air volume range value of the garden blower 200, P_{dynamic} is a pressure parallel to a flowing direction of an airflow, and v may be approximately understood as a target air speed range value of the garden blower 200. For example, when the garden blower 200 is targeted to meet a basic air volume requirement while maintaining a high air speed, the garden blower 200, for example, can blow up wet leaves adhered to the ground. Therefore, Q can be defined between 300 cfm and 400 cfm; and v can be defined between 130 mph and 190 mph. Therefore, in a case of the definition of the work effect is completed, what the user is concerned about is whether the machine is light enough and small enough. This is the core problem that a person skilled in the art have always intended to study and overcome, and is also the core point of this implementation. It should be noted that the foregoing examples of the flow and the dynamic pressure do not constitute a limitation on the garden blower 200 of this implementation, but are cited as an example range, for ease of understanding.

According to the foregoing analysis, it can be learned that a size of the motor 103 affects the size of the axial-flow fan 202. The sizes of the motor 103 and the axial-flow fan 202 together affect a size of the air duct portion 206 surrounding the outer side. Moreover, the configuration of the motor 103 also affects the configuration of the battery pack 105. For a motor, currently applied to the garden blower 200, on the market, when an output power of the motor is relatively large, a life time of a lightweight battery pack is excessively short (generally, a capacity of the battery pack is proportional to a weight of the battery pack), and consequently affects a continuous working capability of the garden blower. Therefore, the specific configuration of the motor 103 is a link in the overall design of the garden blower 200.

For direct current-powered garden blowers, as is well known to a person skilled in the art, the common motor types are a brushless direct current inner rotor motor and a brushless direct current outer rotor motor. It is well known that in the same dimension (for example, output powers of the motors are the same, and rotational speeds of the motor are the same), a volume of the brushless direct current outer rotor motor is smaller than a volume of the brushless direct current inner rotor motor, and a weight of the brushless direct current outer rotor motor is less than a weight of the brushless direct current inner rotor motor. Therefore, from the perspective of a light weight and a small volume, the brushless direct current outer rotor motor is preferable. However, even if the brushless direct current outer rotor motor can be given a small volume and a light weight, the brushless direct current outer rotor motor is limited by its own structure, and a rotational speed of such a motor cannot be relatively high. If the rotational speed of the brushless direct current outer rotor motor is higher, the reliability of the motor decreases, a bearing easily fails, and a magnet steel easily falls off. Furthermore, the brushless direct current outer rotor motor cannot achieve both a high rotational speed and a high output power. This limits the working effect of the garden blower. As for the brushless direct current inner rotor motor, when the output power of the motor is relatively high, the volume of the motor is relatively large and the weight is relatively large; and according to the following data analysis, efficiency of the brushless direct current inner rotor motor decreases when a rotational speed of the motor is relatively high.

For AC-powered garden blowers, a common motor type is an alternating current brush motor. First, in the same dimension (for example, output powers of the motors are the same, and rotational speeds of the motors are the same), the alternating current brush motor has a larger volume and a larger weight than the brushless direct current outer rotor motor and the brushless direct current inner rotor motor. Moreover, it is well known that the alternating current brush motor also cannot have a high speed. An excessively high rotational speed causes difficulty in commutation and large generated sparks.

The foregoing three types of motors are described below by using corresponding data and accompanying drawings.

To obtain a better working effect and a better operating experience, in an implementation, referring to FIG. 2, the motor 103 is a coreless motor without cogging, has high motor efficiency (the efficiency of the motor is higher than 80%, and even reaches 90%), a small volume, and a light weight in a case that a high rotational speed is provided, and can further provide a high output power in a case the foregoing conditions are all met. More specifically, the motor 103 is a coreless brushless direct current motor. The casing 1033 of the coreless brushless direct current motor is approximately cylindrical. The winding coil 1035 is directly wound by an enameled wire into a cylindrical shape, and is accommodated in the casing 1033. A plurality of annular magnetic conductive sheets are laminated to form the stator lamination stack 1034. The rotor 1032 is disposed inside the winding coil 1035, and the rotor 1032 includes a rotating shaft 1036 and a magnetic steel disposed on a periphery of the rotating shaft 1036. In this implementation, the rotor 1032 has an integrally sintered magnetic ring structure.

When the coreless brushless direct current motor 103 is applied to the garden blower 200, the coreless brushless direct current motor 103 is mounted inside the main machine housing 201. A weight and a size of the coreless brushless direct current motor 103 suppress the maximization of a weight and a size of a tube body circumferentially surrounding the coreless brushless direct current motor 103. Specifically, as shown in FIG. 3 to FIG. 14, a rotational speed of the coreless brushless direct current motor is configured to be higher than 35000 rpm and lower than or equal to 80000 rpm in a manner in which a ratio of a maximum output power of the coreless brushless direct current motor 103 configured on the garden blower 200 to the weight of the garden blower 200 is not less than 400 W/kg. It should be noted that the weight of the garden blower 200 herein refers to a weight of the bare machine, that is, no battery pack is mounted.

The coreless brushless direct current motor 103 provided in this application can achieve a light weight and a small volume while providing a high output power and a high rotational speed. Therefore, in a case that outputs power and rotational speeds of motors 103 are kept the same, and configurations of the battery packs are kept consistent, the coreless brushless direct current motor 103 can maintain the operation of the garden blower 200 for a longer time. For a clearer comparison, Table 1 below shows parameter evaluation data of the foregoing several types of motors, and Table 2 below shows parameter evaluation data of the garden blower 200 to which a corresponding motor is applied and the parameter evaluation data of the battery pack 105 fitted to the garden blower 200. It should be noted that the running time refers to the continuous battery life of the machine under the maximum output power of the motor; the total weight of the garden blower 200 refers to the bare machine weight plus the weight of the battery pack 105; a power-to-weight ratio 1 = maximum output power of the motor/weight of the garden blower (the bare machine weight), where the weight of the garden blower herein does not include the battery pack; and a power-to-weight ratio 2 = maximum output power of the motor/total weight of the garden blower in which the battery pack is mounted.

**Table 1**

| Type of motor | Rotational speed of motor (rpm) | Maximum output power of motor (W) | Weight of motor (kg) | Outer diameter of fan (mm) | Bare machine weight (kg) | Type of battery pack (voltage and capacity) | Weight of battery pack (kg) | Total weight of garden blower (kg) | Power-weight ratio 1 (without pack) (W/kg) | Power-weight ratio 2 (with pack) (W/kg) |
|---|---|---|---|---|---|---|---|---|---|---|
| Brushless direct current outer rotor motor | 24000 | 805.9 | 0.25 | 81 | 2.25 | 40 V 4 Ah | 1.3 | 3.55 | 358.18 | 227.01 |
| Brushless direct current outer rotor motor | 23000 | 611.6 | 0.25 | 81 | 2.25 | 40 V 4 Ah | 1.3 | 3.55 | 271.82 | 172.28 |
| Brushless direct current inner rotor motor | 26000 | 582.7 | 0.4 | 85.6 | 2.5 | 40 V 4 Ah | 1.3 | 3.9 | 233.08 | 149.41 |
| Brushless direct current inner rotor motor | 23000 | 590.4 | 0.444 | 83.5 | 2.6 | 40 V 4 Ah | 1.3 | 3.9 | 277.08 | 151.38 |
| Alternating current brush motor | 28000 | 864 | 1.035 | 85.6 | 2.9 | / | / | / | 297.93 | / |
| Alternating current brush motor | 22000 | 921.6 | 1.185 | 112 | 3.1 | / | / | / | 297.29 | / |
| Coreless brushless direct current motor | 45000 | 900 | 0.32 | 71 | 1.1 | 40 V 4 Ah | 1.3 | 2.4 | 818.18 | 375 |
| Coreless brushless direct current motor | 50000 | 1000 | 0.32 | 66 | 1.1 | 40 V 4 Ah | 1.3 | 2.4 | 909.09 | 416.67 |
| Coreless brushless direct current motor | 60000 | 1200 | 0.32 | 56 | 1.1 | 40 V 4 Ah | 1.3 | 2.4 | 1090.9 | 500 |

**Table 2**

| Type of motor | Rotational speed of motor (rpm) | Maximum output power of motor (W) | Weight of motor (kg) | Volume of motor (mm³) | Maximum output power of motor/weight (W/kg) | Maximum output power of motor/volume (W/mm³) |
|---|---|---|---|---|---|---|
| Brushless direct current outer rotor motor | 24000 | 805.9 | 0.25 | 24x10³ | 3223.6 | 0.033 |
| Brushless direct current outer rotor motor | 23000 | 611.6 | 0.25 | 24x10³ | 2446.4 | 0.025 |
| Brushless direct current inner rotor motor | 26000 | 582.7 | 0.4 | 45x10³ | 1456.75 | 0.013 |
| Brushless direct current inner rotor motor | 23000 | 590.4 | 0.444 | 50x10³ | 1329.73 | 0.012 |
| Alternating current brush motor | 28000 | 864 | 1.035 | 158x10³ | 834.78 | 0.0055 |
| Alternating current brush motor | 22000 | 921.6 | 1.185 | 211x10³ | 777.72 | 0.0044 |
| Coreless brushless direct current motor | 45000 | 900 | 0.32 | 27x10³ | 2812.5 | 0.033 |
| Coreless brushless direct current motor | 50000 | 1000 | 0.32 | 27x10³ | 3125 | 0.037 |
| Coreless brushless direct current motor | 60000 | 1200 | 0.32 | 27x10³ | 3750 | 0.044 |

With reference to the data in Table 1 and Table 2, when a maximum output power of an alternating current brush motor 5 is similar to the maximum output power of the coreless brushless direct current motor 103, a weight of the alternating current brush motor 5 is nearly four times the weight of the coreless brushless direct current motor 103. A volume of the alternating current brush motor 5 is nearly 8 times the volume of the coreless brushless direct current motor 103. The weight of the garden blower 200 (bare machine) to which the alternating current brush motor 5 is applied is nearly three times that of the garden blower 200 (bare machine) to which the coreless brushless direct current motor 103 is applied. Moreover, because the alternating current brush motor also cannot have a high speed, where an excessively high rotational speed causes difficulty in commutation and large generated sparks. Therefore, the brushless direct current inner rotor motor is also not an ideal choice during selection of a high-speed motor for the electric tool.

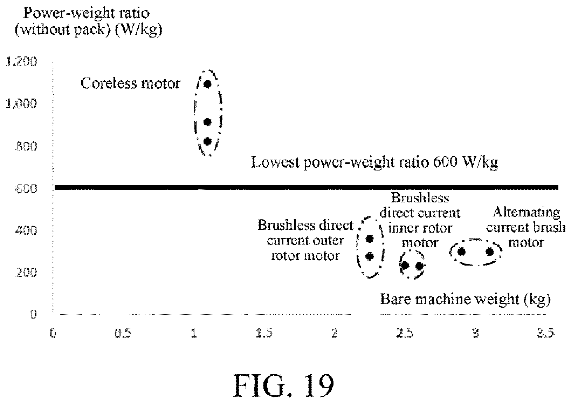

FIG. 19 provides a teaching example (thick lines in the figure). Preferably, a maximum output power of the motor applied to the garden blower is not less than 600 W, and a ratio of the maximum output power of the motor to the weight of the garden blower is not less than 600 W/kg. With reference to data in Table 1 and Table 2, currently, compared with a brushless direct current outer rotor motor 3, a brushless direct current inner rotor motor 4, and the alternating current brush motor 5, the coreless brushless direct current motor 103 provided in the present invention can achieve a small volume, a light weight, and a high rotational speed, and can further provide a relatively high output power while maintaining the foregoing advantages. Compared with the several types of existing motors that are given, in a case that the rotational speed is high (for example, higher than or equal to 45000 rpm), the coreless brushless direct current motor 103 can achieve that a ratio of the maximum output power of the coreless brushless direct current motor 103 to the weight is greater than 2800 W/kg, and a ratio of the maximum output power of the coreless brushless direct current motor 103 to the volume is greater than 0.033 W/mm³. Compared with the several types of existing motors that are given, the coreless brushless direct current motor 103 is applied to the garden blower 200. The bare machine of the garden blower 200 is light in weight and has a good working effect, so that a ratio of a maximum output power of a motor of a conventional garden blower to a weight of the conventional garden blower (a bare machine) can be far exceeded. Further, when types and quantities of configured battery packs 105 are the same (that is, weights of the battery packs are the same), a ratio of the maximum output power of the motor of the conventional garden blower to a total weight of the conventional garden blower (a total weight of a combination of a bare machine and the battery pack) can be far exceeded. Specifically, the rotational speed of the motor is configured to be higher than 35000 rpm and lower than or equal to 100000 rpm in a manner in which a ratio of the maximum output power of the motor connected to the garden blower to the total weight of the garden blower is not less than 300 W/kg. More specifically, when a nominal output voltage of the battery pack 105 is 18 V to 56 V, a capacity of the battery pack 105 is 1.5 Ah to 5 Ah, and a quantity of battery packs 105 combined with the garden blower does not exceed two, the rotational speed of the motor is configured to be higher than 45000 rpm and lower than or equal to 80000 rpm in a manner in which a ratio of a maximum output power of the motor 103 connected to the garden blower 200 to a total weight of the garden blower 200 is not less than 350 W/kg.

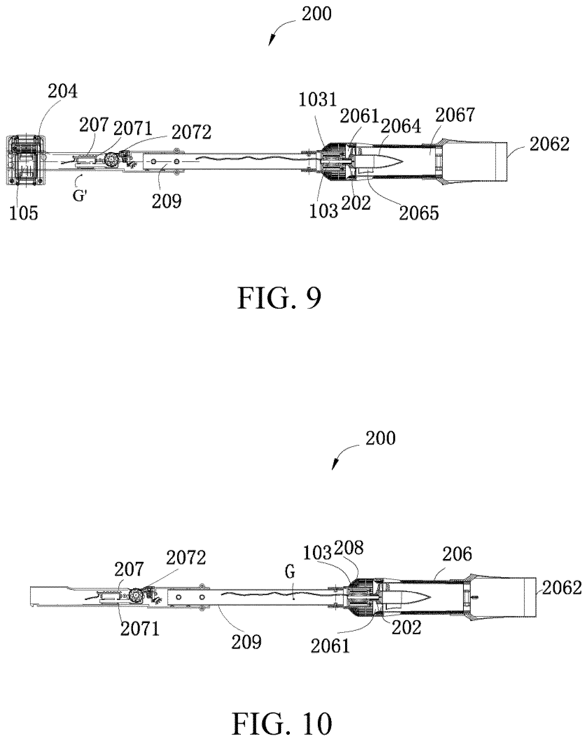

Regarding the configuration of the battery pack, in an implementation, as shown in FIG. 4, FIG. 6 and FIG. 9, one or two or more battery pack mounting portions 204 for combination with the battery pack 105 are disposed on the main machine housing 201. The quantity of the battery packs 105 matches the quantity of the battery pack mounting portions 204. A single battery pack 105 may be configured with a nominal output voltage of 18 V to 56 V and a capacity of 1.5 Ah to 5 Ah. For example, in the implementation, the quantity of the battery packs is configured to be two, a nominal output voltage of a single battery pack 105 is 20 V, and a capacity thereof is 2 Ah. The battery pack 105 is disposed close to the operating handle 207, to achieve that the heavy units are as close as possible to an operation holding point, thereby reducing fatigue of a user during work. More specifically, a structure of FIG. 4 differs from structures of FIG. 6 and FIG. 9 in that: at least a part of a structure of the battery pack 105 in FIG. 4 is located below the operating handle 207, and the battery packs 105 in FIG. 6 and FIG. 9 are both located behind the operating handle 207. FIG. 6 differs from FIG. 9 in that: an insertion direction of the battery pack 105 in FIG. 6 is basically consistent with an extension direction of the fan axis X1. An insertion direction of the battery pack 105 in FIG. 9 and the extension direction of the fan axis X1 are arranged at an angle. Preferably, the angle may be 90 degrees. The burden caused by the weight of the battery pack 105 to the user during operation affects the capability of the user to work continuously. Therefore, for a motor having a relatively high output power, a single battery pack on the market, for example, a battery pack with a nominal output voltage of 20 V and a capacity of 2 Ah, usually has a relatively low output voltage. When driving an electric tool with a relatively high output power, the battery pack probably cannot supply normal operation power for the garden blower, or a running time of the battery pack 105 is excessively short, and cannot maintain normal one-time work of the garden blower 200. However, addition of a weight of a single battery pack, for example, an increase in a quantity of battery cores, on the one hand, increases the total weight of the garden blower 200, and on the other hand, enlarges a size of the garden blower 200, resulting in inconvenience to the user during use. Therefore, the electric tool with a relatively high output power is more suitable for being powered by using backpack equipment. That is, in this case, the battery pack 105 may be configured to be a portable battery pack that can be attached to clothes or a waistband of a user or is supported by the body of a user.

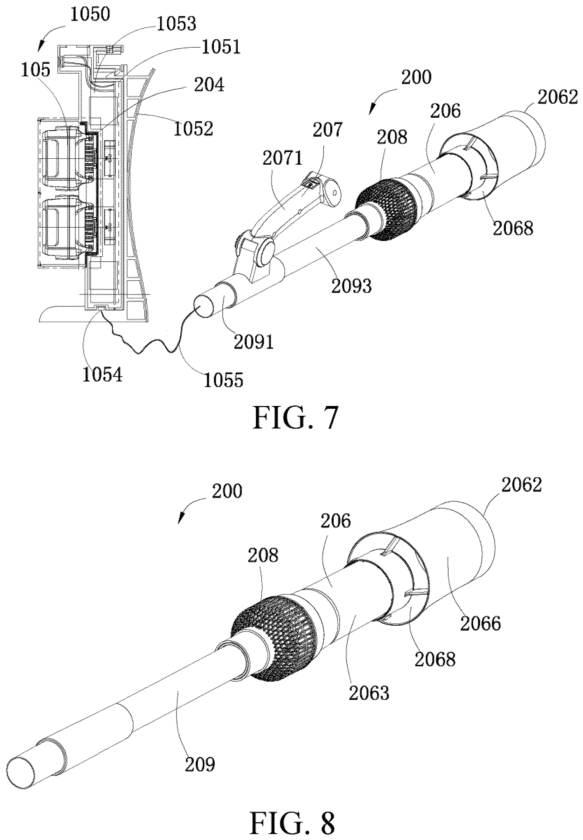

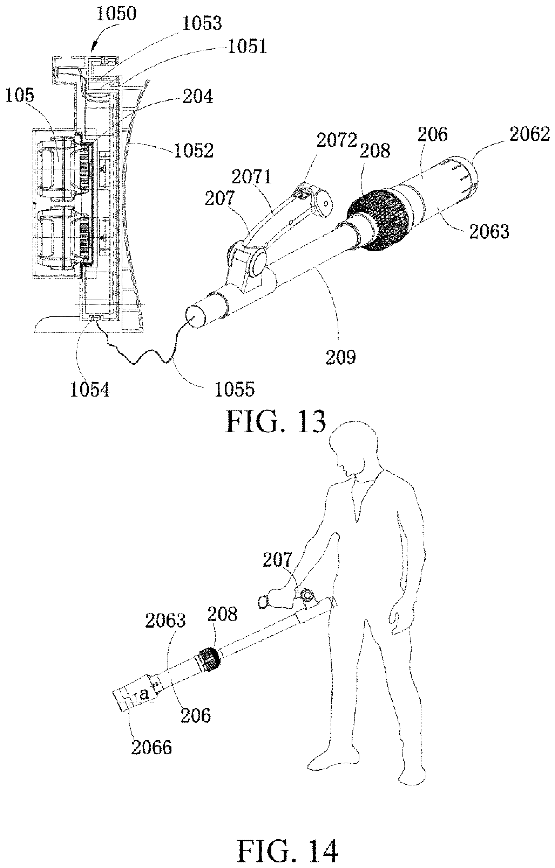

Specifically, in another implementation, referring to FIG. 7 and FIG. 13, the garden blower 200 is powered by a backpack battery pack 1050. The backpack battery pack 1050 is configured to be carried on the back of the user, and the backpack battery pack 1050 includes a backpack apparatus 1051 for the user to carry on the back. The backpack apparatus 1051 is provided with the foregoing battery pack mounting portion 204 configured for connected to or accommodating the battery pack 105. In this implementation, the battery pack 105 may be a single large-capacity battery pack such as a 56 V 5 Ah lithium battery pack. The battery pack 105 may alternatively be a small-capacity battery pack, for example, a lithium battery pack with a nominal output voltage of 20 V and a capacity of 2 Ah. In this case, the backpack battery pack 1050 can be connected to or accommodate two or three or four small-capacity battery packs 105. The small-capacity battery packs 105 may be 20 V lithium battery packs that are universal for other tools. The backpack apparatus 1051 includes a strap 1052 and a back plate 1053. The strap is configured for a user to wear so that the battery pack 105 can be supported by the body of the user. The battery pack mounting portion 204 may be formed on the back plate 1053, and the battery pack mounting portion 204 connects the battery pack 105 and the back plate 1053 mechanically. The back plate 1053 includes a power input interface (not shown), and the power input interface (not shown) can be electrically connected to the battery pack 105. The backpack battery pack further includes a power output interface 1054 and a cable 1055 electrically connected to the power output interface. One end of the cable 1055 is connected to the power output interface, and the other end of the cable 1055 is connected to the garden blower 200 and configured to output electrical energy to the garden blower 200.

Preferably, in this implementation, the garden blower 200 is further provided with a battery pack mounting portion (not shown) with which the battery pack 105 can be directly combined. The garden blower 200 may alternatively be constructed as an apparatus that can work independently without relying on the backpack battery pack 1050 for power supply. That is, in this exemplary implementation, the battery pack 105 can be combined with the backpack apparatus 1051 to supply power to the garden blower 200, or can be directly combined with the garden blower 200 to supply power to the garden blower 200.

Further, as is well known to a person skilled in the art, an air duct structure of a fluid fan is determined based on a specific speed (nₛ). For an axial-flow blower, a specific speed is generally in a range of 150 to 400, and total pressure efficiency of the blower is higher when the specific speed in a range of 170 and 270. The specific speed (nₛ) is mainly determined by three parameters: an output total pressure P_{Tf}, a flow Q, and a rotational speed n of the motor. The specific speed is mainly represented by using the following formula: nₛ=5.54×n×Q^{1/2}/P_{Tf}^{3/4}, where P_{Tf} is the output total pressure of the blower.

Further, P_{shaft}=P_{Tf}×Q, where P_{shaft} is a motor shaft power and is a predetermined constant. P_{Tf}=1/2ρv²+P_{static}, where ρ is an air density, v may be approximately understood as an air speed of the garden blower, and P_{static} is a static pressure-a pressure perpendicular to a flowing direction of an airflow. In a case that the static pressure is ignored, the specific speed nₛ≈5.54×n×Q^{1/2}/[1/2ρv²]^{3/4}. Therefore, it can be learned from this formula that impact of the air speed on the specific speed is greater than impact of an air volume on the specific speed. When the rotational speed n of the motor is increased, the air volume Q and the air speed v are not expanded by the same times, and need to be appropriately distributed to ensure that the specific speed nₛ is within a suitable range. Moreover, the suitable range can further enable the performance of the motor to be optimally utilized, and both the air volume and the air speed of the blower to be taken into consideration.

Further, to suppress a size of the tube circumferentially surrounding the axial-flow fan 202, impact on the outer diameter of the axial-flow fan 200 also needs to be considered in selection for the rotational speed of the motor 103. As mentioned above, a higher rotational speed of the motor indicates a smaller size of the motor and a smaller outer diameter of the fan. An excessively small outer diameter of the fan will affect an air blowing effect of the garden blower 200. To maximize utilization of the high rotational speed and the high output power provided by the motor while taking the working effect of the garden blower 200 into consideration, after extensive researches by technicians, in this implementation, in a manner in which the ratio of the maximum output power of the coreless brushless direct current motor configured on the garden blower to the weight of the garden blower is not less than 600 W/kg, the rotational speed of the coreless brushless direct current motor 103 is configured to be higher than or equal to 45000 rpm and lower than 80000 rpm, the outer diameter of the fan is greater than or equal to 32 mm or less than or equal to 67 mm, the diameter of the coreless brushless direct current motor is 36 mm to 45 mm, the volume of the coreless brushless direct current motor 103 is configured to not exceed 40x10³ mm³, the maximum output power of the coreless brushless direct current motor is 700 W to 1500 W, and the weight of the garden blower can be controlled between 0.6 kg and 2 kg.

Preferably, when the rotational speed of the coreless brushless direct current motor 103 connected to the garden blower 200 is configured to be 50000 rpm to 60000 rpm, the maximum output power of the coreless brushless direct current motor 103 is 900 W to 1300 W, the volume of the coreless brushless direct current motor is configured to be 27x103 mm3mm3, and the weight of the garden blower can be controlled to not exceed than 1.2 kg. It should be noted that the weight of the garden blower 200 herein refers to a weight of a bare machine not including the battery pack 105. More specifically, the rotational speed of the coreless brushless direct current motor 103 is 60000 rpm, the diameter of the coreless brushless direct current motor 103 is 38 mm, the maximum output power of the coreless brushless direct current motor is 1200 W, and the diameter of the fan is 55 mm. In this way, neither the air blowing effect of the garden blower 200 nor the light weight of the entire machine will be affected.

In addition, during consideration of the design of the axial-flow fan 202, a hub ratio of the fan is a consideration parameter for the weight. It should be noted that the hub ratio is equal to a ratio of the diameter of the hub 2021 of the axial-flow fan 202 to the diameter of the fan. The embodiments provided in this application, through the application of the motor, pursue an objective that the garden blower 200 can achieve a relatively high level in the air speed while being lighter in weight and meeting a general requirement for the air volume. Through simulation analysis, the hub ratio of the fan in this embodiment is between 0.45 and 0.65, and preferably, the hub ratio is between 0.46 and 0.5.

The inventor also found that only a suitable arrangement of the motor can meet the foregoing requirements. Regarding the arrangement of the motor 103, for a motor 103 with a small size, it is usually chosen to place the motor 103 inside the flow guiding cone 2064 in the industry, thereby taking advantage of the small size of the motor 103 and saving space without increasing the size of the main machine housing. A high-speed motor 103 is mounted inside the flow guiding cone 2064, and the hub 2021 of the axial-flow fan 202 is mounted on and connected to a motor shaft 1030 to position the axial-flow fan 202. To reduce air resistance and an airflow loss, and increase the air speed, outer contours of the hub 2021 of the axial-flow fan 202 and the flow guiding cone 2064 are designed to be streamlined. Therefore, the diameter of the motor 103 also determines the diameter of the hub 2021. In this application, the diameter of the coreless brushless direct current motor is 38 mm. The diameter of the hub 2021 of the axial-flow fan 202 is approximately 38 mm, and the diameter of the fan is 55 mm. In this way, sizes of blades surrounding a periphery of the hub are only 8.5 mm, and the sizes of the blades 2022 cannot meet the requirements of the user for the working effect of the garden blower 200.

Therefore, in this implementation, the motor 103 and the flow guiding structure are arranged on two sides of the axial-flow fan 202. The diameter of the motor 103 is greater than the diameter of the hub 2021. Specifically, a ratio of the diameter of the motor 103 to the diameter of the hub 2021 is 1.2 to 1.6. To reduce the air resistance, in a direction in which the fan axis extends, a longitudinal distance between a foremost edge of the motor 103 and a rotation center of the axial-flow fan 2021 is 5 mm to 30 mm.

The design of the structure of the air duct portion 206 in the present invention is described below in detail, and how to further support the foregoing working performance is explained based on the corresponding structure of the air duct portion.

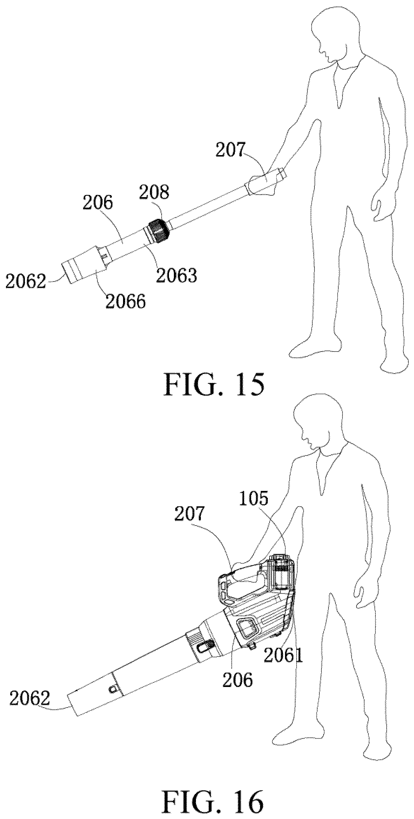

For conventional garden blowers on the market, there are mainly two cases for lengths of air duct portions. In the first case, referring to FIG. 16, the air inlet 2061 is provided surrounding a rearmost end of the garden blower 200, the operating handle 207 and/or the battery pack 105 is supported above the air duct portion 206, a length of the air duct portion 206 in the longitudinal direction is basically equal to a length of the garden blower 200 in the longitudinal direction, and the length of the garden blower is generally 750 mm to 850 mm. In the second case, the battery pack mounting portion is disposed on a rear end (not shown) of the air duct portion, and an air inlet for allowing external air to flow into the air duct portion is formed at least at a side portion and a bottom portion of the air duct portion. The ratio of the length of the air duct portion to the length of the garden blower in the longitudinal direction is not less than 3/4. The arrangement of the foregoing two types of air duct portions that are relatively long increases losses of airflows flowing into the air duct portions.

In a case that the motor 103 applied to the garden blower 200 has a small diameter and a light weight, to achieve a light weight of the entire machine, a size of an outer diameter of the tube body (a region of the air duct portion 206 corresponding to the motor 103) circumferentially surrounding the motor 103 becomes smaller, and a size of an outer diameter of a tube body corresponding to the small-diameter axial-flow fan 202 also becomes smaller, that is, the air duct portion 206 becomes thinner. Specifically, with reference to the motor 103 with the small volume and the high output power, a maximum cross-sectional area of the part of the air duct portion 206 corresponding to the axial-flow fan 202 in a direction perpendicular to the longitudinal direction is not greater than 2826 mm². However, a relatively thin tube will inevitably increase the air resistance and consequently increase the airflow loss.

To meet the requirements of the light weight and the air blowing effect, the present invention provides a novel design of the air duct portion 206 of the garden blower 200. The air duct portion 206 is only configured on a front end of the garden blower 200, and compared with the operating handle 207, the air duct portion 206 is closer to the ground. Specifically, still referring to FIG. 3 to FIG. 13, FIG. 14, and FIG. 15, the garden blower 200 includes an extension rod 209 extending longitudinally between the proximal end and the distal end. The air duct portion 206 is supported on the distal end of the extension rod 209, the operating handle 207 is supported on the proximal end of the extension rod 209, and the operating handle 207 and the air duct portion 206 are separated from each other by a distance between the proximal end and the distal end, so that the air inlet 2061 is closer to the foreign objects than the holding portion 2071 when the user holds the garden blower 200 for operation. When the operator holds the garden blower 200 for operation, the motor 103, the air inlet 2061, the axial-flow fan 202, and the air outlet 2062 are all located below the operating handle 207. With this design, the air duct portion 206 becomes shorter. Specifically, the rotational speed of the motor is configured to be higher than 35000 rpm and lower than or equal to 80000 rpm in a manner in which a ratio of the length of the air duct portion 206 in the longitudinal direction to the length of the entire garden blower 200 in the longitudinal direction is less than or equal to 60%, the weight of the garden blower 200 does not exceed 2 kg, the air volume provided by the garden blower 200 is not less than 300 cfm, and the air speed provided by the garden blower 200 is not lower than 130 mph. More specifically, the rotational speed of the motor 103 is configured to be higher than or equal to 45000 rpm and lower than 80000 rpm in a manner in which the ratio of the length of the air duct portion 206 in the longitudinal direction to the length of the entire garden blower 200 in the longitudinal direction is less than or equal to 50%, the weight of the garden blower 200 does not exceed 1.5 kg, the air volume provided by the garden blower 200 is not less than 340 cfm, and the air speed provided by the garden blower 200 is not lower than 150 mph.

More specifically, in the implementation, the air duct portion 206 is linear, and the length of the air duct portion is not greater than 500 mm. Preferably, the length of the air duct portion 206 is not greater than 420 mm, and more preferably, the length of the air duct portion is 200 mm to 350 mm. Therefore, the length of the air duct portion may be 250 mm, 2280 mm, 300 mm, 330 mm, or 340 mm. The longitudinal length of the garden blower 200 is generally not less than 750 mm. Therefore, the longitudinal length of the garden blower may be 710 mm, 740 mm, 750 mm, 760 mm, 780 mm, 790 mm, 800 mm, 810 mm, 830 mm, or 850 mm.

Further, to ensure a sufficient air outlet volume of the garden blower 200 and maintain a relatively high air speed of the garden blower 200, the maximum cross-sectional area of the air duct portion 206 in the direction perpendicular to the longitudinal direction is less than or equal to 65x10² mm² and greater than or equal to 22x10² mm².

Further, in this application, although the diameter of the axial-flow fan 202 is very small, because the motor 103 with a small volume and a high output power is used, and is matched with a corresponding structural design of the air duct portion, a ratio of a maximum air speed provided by the garden blower 200 to the diameter of the fan in this implementation is relatively large, and the weight of the garden blower 200 is very light. Specifically, when the rotational speed of the motor 103 is higher than 35000 rpm and lower than or equal to 80000 rpm, and a ratio of the maximum air speed of the garden blower 200 to the diameter of the axial-flow fan 202 is not less than 2.5 mph/mm, the weight of the garden blower is not greater than 1.5 kg. Preferably, when the rotational speed of the motor 103 is higher than or equal to 45000 rpm and lower than or equal to 60000 rpm, and the ratio of the maximum air speed of the garden blower to the diameter of the fan is not less than 2.7 mph/mm, the weight of the garden blower is not greater than 1.2 kg. Further, when the rotational speed of the motor 103 is configured to be higher than 35000 rpm and lower than or equal to 80000 rpm, the ratio of the maximum output power of the motor 103 to the diameter of the axial-flow fan 202 is not less than 12 W/mm. Preferably, the rotational speed of the motor 103 is configured to be higher than or equal to 45000 rpm and lower than or equal to 80000 rpm, and the ratio of the maximum output power of the motor 103 to the diameter of the axial-flow fan 202 is not less than 15 W/mm.

The air duct portion 206, the motor 103, the axial-flow fan 202, the flow guiding cone 2064, and the stationary blades 2065 are defined as a first assembly located on one end of the extension rod 209. For the garden blower 200 (the air inlet is close to the ground) in this implementation, because most of the heavy units are gathered at the front end, the center of gravity G of the entire garden blower inevitably moves forward. In this regard, the inventor optimized an arrangement of the internal structure of the air duct portion 206, to optimize a position of the center of gravity G (the center of gravity of the bare garden blower), and improve the comfort for a user during operation.

Still referring to FIG. 5, FIG. 6, and FIG. 9 to FIG. 11, at least the stator 1031 of the motor 103 is disposed an outer side of the air inlet 2061. Specifically, the stator 1031 of the motor 103 is disposed between the air inlet 2061 and the battery pack mounting portion 204. More specifically, the stator 1031 of the motor 103 is disposed between the air inlet 2061 and a foremost edge 2074 of the operating handle 207. In this case, both the motor 103 and the axial-flow fan 202 directly connected to the motor 103 move backward. The center of gravity G of the garden blower 200 can be made relatively closer to the holding portion through which the user holds the garden blower 200.

Specifically, referring to FIG. 10, when the garden blower 200 is not combined with the battery pack 105, the ratio of a longitudinal distance between the center of gravity G of the garden blower 200 and the foremost edge of the air outlet 2062 to the longitudinal length of the garden blower 200 does not exceed 0.6. Preferably, the ratio of the longitudinal distance between the center of gravity G of the garden blower 200 and the foremost edge of the air outlet 2062 to the longitudinal length of the garden blower 200 does not exceed 0.5. In this case, the garden blower 200 may be powered by a backpack battery pack. On the other hand, the axial-flow fan 202 is closer to the air inlet 2061. When the motor 103 drives the axial-flow fan 202 to rotate at a high speed, external air can be quickly and sufficiently introduced into the air duct portion 206, the air flows in quickly, leading to a small airflow loss, and a sufficient amount of airflow is driven by the motor 103 to flow quickly, leading to a large air pressure, thereby improving the air speed of the garden blower 200. Specifically, in this implementation, a longitudinal distance between a rearmost edge of the air inlet 2061 and the rotation center of the axial-flow fan 202 is 20 mm to 35 mm. Preferably, the longitudinal distance between the rearmost edge of the air inlet 2061 and the rotation center of the axial-flow fan 202 is 25 mm. The longitudinal distance between the rearmost edge of the air inlet 2061 and the rotation center of the axial-flow fan 202 is not greater than 1/10 of the longitudinal length of the air duct portion 206. It should be noted that for a garden blower provided with a plurality of air inlets 2061, for example, an axial air inlet, a radial air inlet, and a bottom air inlet, a longitudinal direction between any air inlet 2061 and the center of the axial-flow fan 202 within the scope of this application should be understood as being covered by this application.

Further, referring to FIG. 4 and FIG. 9, when the garden blower 200 is connected to a battery pack, to avoid affecting a continuous working capability of a user, in this implementation, the battery pack mounting portion 204 is disposed on an end of the extension rod 209 away from the air duct portion 206. Specifically, in the longitudinal direction, the foremost edge of the operating handle 207 is between the rearmost edge of the battery pack 105 and the air inlet 2061, and the foremost edge of the operating handle 207 and the rearmost edge of the air inlet 2061 are spaced apart by a preset distance in the longitudinal direction. In this way, when the battery pack 105 is connected to the battery pack mounting portion 204, the battery pack 105 located on a rear side can balance the position of the center of gravity G' of the garden blower in the longitudinal direction (the center of gravity G' herein is understood as the center of gravity of the entire garden blower in a state of being connected to the battery pack 105). FIG. 4 differs from FIG. 9 in that: at least a part of the structure of the battery pack in FIG. 4 is located below the operating handle 207, and the battery pack in FIG. 9 is located behind the operating handle 207. The center of gravity G' of the garden blower is mainly determined by positions of the four heavy units described above. Therefore, in this implementation, the position of the center of gravity G' of the garden blower is balanced in the longitudinal direction by configuring at least one structure of the foregoing four heavy units behind the center of gravity G' of the garden blower.

Specifically, at least a part of the structure of the battery pack 105 is located behind the center of gravity G' of the garden blower 200 (the center of gravity G' herein is understood as the center of gravity of the entire blower in a state of being connected to the battery pack). The battery pack 105 is defined as a second assembly located on another end of the extension rod 209. Specifically, in this implementation, the battery pack 105 includes a first battery pack 1051 and a second battery pack 1052 connected to the battery pack mounting portion. For example, both the first battery pack 1051 and the second battery pack 1052 have a nominal output voltage of 20 V and a capacity of 5 Ah, and a total weight of the first battery pack 1051 and the second battery pack 1052 is approximately 1.2 kg to 1.4 kg. In this case, a weight of the second assembly is greater than a weight of the first assembly, and the center of gravity G' of the entire blower is near the back. A ratio of the weight of the first assembly to the total weight of the garden blower in which the battery pack is mounted is not greater than 0.5. A ratio of the weight of the second assembly to the weight of the first assembly does not exceed 1.5. Preferably, the ratio of the weight of the second assembly to the weight of the first assembly does not exceed 1.15. A difference between the weight of the second assembly to the weight of the first assembly may be 0.1 kg, 0.2 kg, 0.3 kg, 0.4 kg, or 0.5 kg. In this way, when the battery pack 105 is connected to the battery pack mounting portion 204, a ratio of the longitudinal distance between the center of gravity G' of the garden blower 200 in which the battery pack 105 is mounted and the foremost edge of the air outlet to the longitudinal length of the garden blower is not less than 0.75. Preferably, the ratio of the longitudinal distance between the center of gravity G' of the garden blower in which the battery pack 105 is mounted and the foremost edge of the air outlet 2062 to the longitudinal length of the garden blower is not less than 0.8. More specifically, in this implementation, the first battery pack 1051 and the second battery pack 1052 are disposed close to the operating handle 207, and a projection of the center of gravity G' of the garden blower 200 in which the first battery pack 1051 and the second battery pack 1052 are mounted on the extension rod 209 is located within a projection range of the operating handle 207 on the extension rod 209. In this way, when the garden blower 200 is connected to the battery pack 105, an appropriate configuration of the battery pack 105, on the one hand, can adjust the center of gravity G' of the entire garden blower and improve the comfort of a handheld mode, and on the other hand, can maintain the running time of the garden blower. In this implementation, the configuration of two battery packs can maintain the garden blower to run for 10 or more minutes. To avoid increasing the longitudinal length of the garden blower 200, the battery pack mounting portion 204 is located below the operating handle 207, and projections of the battery pack mounting portion 204 and the operating handle 207 on the extension rod 209 at least partially overlap.

In addition, as analyzed above, for the garden blower 200 with the air inlet 2061 relatively close to the ground, the air duct can be optimized, to reduce the air resistance and reduce the airflow loss. However, in a case that the garden blower 200 is not directly provided with the battery pack 105, the center of gravity G of the garden blower is inevitably slightly far away from a holding point of a user, resulting in poor comfort during operation. For example, the garden blower is powered by a backpack battery pack. However, if a sufficiently light weight of the garden blower 200 can be ensured, even if the center of gravity G is not at the holding portion or is slightly far away from the holding point, when the weight of the garden blower carried by the user is constant, the user will not feel strenuous. Therefore, in addition to optimizing the position of the center of gravity G, this solution also ensures a sufficiently lightweight of the first assembly.

In addition, when the garden blower 200 actually blows, users all expect that the axis of the air duct portion 206 and the horizontal plane of action are maintained at an optimal angle that makes the operation the most labor-saving and the air blowing efficiency the highest. When the weight of the first assembly is relatively large, the optimal angle will be broken. Specifically, if the weight of the first assembly is excessively large, when the user holds the garden blower 200 for operation with a single hand, the garden blower will naturally hang down.

After a plurality of times of prototype use analysis, in this implementation, as shown in FIG. 14 and FIG. 15, when a user carries the garden blower 200 with a single hand for operation, the rotational speed of the motor 103 is configured to be higher than 35000 rpm and lower than or equal to 80000 rpm in a manner in which an angle α between an extension direction of the fan axis X1 of the garden blower 200 connected to the first assembly and the ground is within a range of 20 degrees to 40 degrees. More specifically, the diameter of the motor 103 is within a range of 36 mm to 45 mm, and the weight of the motor 103 is not greater than 0.35 kg, so as to maintain a total weight of the first assembly not greater than 1.5 kg. Preferably, the rotational speed of the motor 103 is configured to be higher than or equal to 50000 rpm and lower than or equal to 60000 rpm in a manner in which the total weight of the first assembly is not greater than 1.2 kg. According to different configurations of the motor parameters, a feasible weight of the first assembly may be 0.6 kg, 0.8 kg, 0.9 kg, 1.0 kg, 1.1 kg, or the like.

Referring to FIG. 3 to FIG. 13, an air inlet shield 208 circumferentially surrounds the outer side of the air inlet 2061, and a plurality of hollowed-out shield bores 2081 configured for an airflow to pass through are provided on an outer surface of the air inlet shield 208. The shield bores 2081 are formed by a regular geometric body or an irregular geometric body, and each geometric body includes at least two opposite sides 2082 and 2083. First, for a case that the air inlet 2061 is relatively close to the foreign objects on the ground, when the user uses the garden blower to perform a cleaning operation, debris and fallen leaves are easily raised. The axial-flow fan 202 rotating at a high speed will drive small hard objects (such as pebbles) into the air duct portion 206 along with the air. The hard objects may hit the outer surface of the axial-flow fan 202 and damage the axial-flow fan 202, and consequently affect the air blowing effect.

In this implementation, a maximum bore diameter of the shield bore is not greater than 4 mm, or it is understood as that a maximum distance between the two opposite sides is not greater than 4 mm. Preferably, the maximum bore diameter of the shield bore is not greater than 3 mm. A maximum cross-sectional area of each shield bore 2081 is greater than or equal to 3 mm² and less than or equal to 13 mm². Therefore, a projection area may be 4 mm², 5 mm², 6 mm², 7 mm², 8 mm², or 9 mm². Preferably, the maximum cross-sectional area of each shield bore 2081 is greater than or equal to 4 mm² and less than or equal to 6 mm².

When the air duct portion 206 becomes thinner and the cross-sectional area of the air outlet 2062 relatively becomes smaller, the requirement for a light weight can naturally be met, but the air volume will be reduced to some extent. In this regard, referring to FIG. 3 to FIG. 10, the air duct portion 206 further includes an auxiliary air blowing tube 2066 in fluid communication with the main air blowing tube 2063. There is a gap 2060 between the main air blowing tube 2063 and the auxiliary air blowing tube 2066, so that external air can enter the auxiliary air blowing tube 2066 through the gap. Specifically, the air inlet 2061 is formed on one side of the main air blowing tube 2063 close to the proximal end, and the other side of the main air blowing tube 2063 is provided with a main air blowing port 2067 opposite to the air inlet 2061. The auxiliary air blowing tube 2066 is provided with an auxiliary air inlet 2068 in communication with the main air blowing port 2067 and a nozzle located on a front end of the auxiliary air inlet 2068 in the longitudinal direction. The nozzle forms the air outlet 2062. The auxiliary air inlet 2068 surrounds at least a part of the main air blowing port 2067, and the foregoing gap configured for the external air to flow into the auxiliary air blowing tube 2066 is formed between an inner ring of the auxiliary air inlet 2068 and an outer ring of the main air blowing port 2067. Through disposition of the auxiliary air blowing tube 2066, when the garden blower 200 has a high air speed, an air blowing volume of the garden blower 200 can still meet the demand. More specifically, the motor connected to the garden blower 200 can provide a rotational speed of 45000 rpm to 80000 rpm, and a cross-sectional area of the air outlet 2062 in the direction perpendicular to the longitudinal direction is larger than a cross-sectional area of the main air blowing port 2067. The garden blower 200 connected to a motor 103 with a rotational speed of 45000 rpm to 80000 rpm and the auxiliary air blowing tube 2066 provides an air volume greater than 300 cfm and an air speed greater than 130 mph. Preferably, the motor 103 connected to the garden blower 200 can provide a rotational speed of 50000 rpm to 60000 rpm, and a cross-sectional area of the air outlet 2062 in the direction perpendicular to the longitudinal direction is larger than a cross-sectional area of the main air blowing port 2067. The garden blower 200 connected to the motor 103 with a rotational speed of 50000 rpm to 60000 rpm and the auxiliary air blowing tube 2066 provides an air volume greater than or equal to 340 cfm and an air speed greater than or equal to 150 mph.

Further, the air entering the air duct portion 260 converges into an airflow moving at a high speed under the rotation of the axial-flow fan 202, and is diffused from the air inlet 2061 to the air outlet 2062. The airflow diffused from the air inlet 2061 to the air outlet 2062 includes a high-speed region surrounding the fan axis X1 of the axial-flow fan and a low-speed region on a periphery of the high-speed region. For a conventional garden blower, to ensure a proper operation distance between the air outlet and the ground, the length of the air duct portion is generally approximately 750 cm to 850 cm. In this application, the length of the air duct portion 206 is shortened to reduce air speed attenuation. A specific length of the main air blowing tube 2063 is configured to be 90 mm to 250 mm. Therefore, the length of the main air blowing tube 2063 may be 110 mm, 120 mm, 130 mm. 140 mm, 150 mm, 160 mm, 170 mm, 180 mm, 190 mm, 200 mm, 210 mm, 220 mm, 225 mm 230 mm, 240 mm, or 245 mm. According to the CAE simulation analysis, the main air blowing tube 2063 is within the foregoing length range, and a cross-sectional area of the high-speed region remains basically unchanged in a process in which the airflow flows from the air inlet 2061 to the main air blowing port 2067 To maximize an increased volume of the airflow flowing into the auxiliary air blowing tube 2066 through the gap 2060, the auxiliary air inlet is outwardly flared, and the cross-sectional area of the auxiliary air inlet 2068 in the direction perpendicular to the longitudinal direction is greater than the cross-sectional area of the main air blowing port 2067. Because the cross-sectional area of the auxiliary air inlet 2068 is increased, an air speed of the airflow flowing into the auxiliary air blowing tube 2066 naturally decreases at the front end of the auxiliary air inlet 2068. In this implementation, the auxiliary air blowing tube 2066 is configured into a frustum shape to compress the airflow entering the auxiliary air blowing tube 2066 to increase the air speed again. In addition, considering that the cross-sectional area of the air outlet 2062 cannot be configured to be excessively small, and an air outlet with an excessively small size may affect the air volume, specifically, a ratio of the cross-sectional area of the air outlet 2062 in the direction perpendicular to the longitudinal direction to the cross-sectional area of the main air blowing port 2067 is 1.4 to 2.5. In this implementation, an angle formed by an outer wall of the auxiliary air blowing tube 2066 and the fan axis X1 is approximately 3 degrees to 9 degrees, to increase an air pressure in the auxiliary air blowing tube 2066 without affecting the air volume. Specifically, a ratio of the cross-sectional area of the high-speed region at the air outlet 2062 to a cross-sectional area of the high-speed region at the main air blowing port 2067 is 0.7 to 1.1.

Further, the high-speed region flowing outward from the air outlet 2062 is defined as a high-speed wake region. When considering an air speed effect of the garden blower 200, a longer high-speed wake region and a larger cross-sectional area of the high-speed wake region in the direction perpendicular to the longitudinal direction indicate a more desirable air speed effect of the garden blower 200. The length of the high-speed wake region and the cross-sectional area of the high-speed wake region together represent a magnitude of the air speed of the airflow flowing out of the air outlet 2062.

When the longitudinal length of the auxiliary air blowing tube 2066 is excessively large, the airflow loss is inevitably large, the high-speed wake region cannot be maintained at a desirable length, and a large cross-sectional area of the high-speed wake region cannot be ensured. Certainly, it is easy to be understood that if the length of the auxiliary air blowing tube 2066 in the longitudinal direction is excessively small, a high-speed region airflow and a low-speed region airflow that enter the auxiliary air blowing tube 2066 from the auxiliary air inlet 2068 are not uniformly mixed, resulting in turbulent airflows, and the air outlet 2062 cannot provide a desirable length of the high-speed wake region and a desirable cross-sectional area of the high-speed wake region. In this implementation, the length of the auxiliary air blowing tube 2066 in the longitudinal direction is set to 100 mm to 160 mm. Preferably, the length of the auxiliary air blowing tube is 120 mm to 140 mm. Specifically, the rotational speed of the motor 103 is configured to be higher than 35000 rpm and lower than or equal to 120000 rpm, and a ratio of the length of the main air blowing tube 2063 in the longitudinal direction to the length of the auxiliary air blowing tube 2066 in the longitudinal direction is greater than or equal to 1.1 and less than or equal to 1.5 in a manner in which the high-speed wake region forwardly exceeds the air outlet 2062 in length, and in the longitudinal direction, a ratio of the length of the high-speed wake region that extends outward beyond the air outlet 2062 to the length of the auxiliary air blowing tube 2066 is 1.1 to 1.5. Specifically, the length of the high-speed wake region is 182 mm. Within the length range, attenuation of the cross-sectional area of the high-speed wake region 20603 is lower than that of a maximum cross-sectional area of the high-speed region inside the auxiliary air blowing tube 2066.

Further, the auxiliary air blowing tube 2066 is movably connected to the main air blowing tube 2063. The movable connection is understood as that the auxiliary air blowing tube 2066 can be detachably separated from the main air blowing tube 2063, or the auxiliary air blowing tube 2066 can be retracted back by a preset distance. Specifically, as shown in FIG. 4, FIG. 6 to FIG. 8, and FIG. 13, the garden blower 200 has a first operating mode in which external air enters from the air inlet 2061 and is blown outward from the main air blowing port 2067 and a second operating mode in which external air enters from the air inlet 2061 and is blown outward from the nozzle of the auxiliary air blowing tube 2066. A user can freely select the first operating mode or the second operating mode for operation according to a cleaning requirement. A user may select a matching mode for operation according to different working conditions. Specifically, when a yard, a park, a street, and other places full of fallen leaves need to be cleaned, the user may select the second operating mode with a relatively large air volume and a relatively low air speed to quickly gather the fallen leaves in a to-be-cleaned region within a unit time; and when wet leaves adhered to the ground need to be cleaned, the user may select the first operating mode with a relatively small air volume and a relatively high air speed to quickly peel off foreign objects from the ground with a sufficient force.

Still referring to FIG. 3 to FIG. 6, FIG. 9, and FIG. 10, in this implementation, the extension rod 209 is constructed as an elongated tubular structure, including a handle support section 2091 located on a rear side to support the operating handle 207, a motor support section 2092 located on a front side to support the motor 103, and a middle section 2093 connecting the handle support section 2091 and the motor support section 2092. To prevent hard objects with relatively small sizes on the ground from entering with air through the shield bores 2081 under some extreme conditions, the motor support section 2092 is provided with a motor housing 2094 that at least circumferentially covers a periphery of the motor 103, to decrease a frequency at which the hard objects are in contact with the motor 103 as much as possible.

FIG. 8 to FIG. 10 show another implementation of the operating handle 207. This solution differs from the foregoing structure in that the operating handle is directly disposed on the extension rod. Specifically, the operating handle may be configured as a sheath having the same extension direction as the extension rod, and the sheath is sleeved on a periphery of the handle support section 2091. The holding portion 2071, the extension rod 209, and the air duct portion 206 are arranged in sequence in the extension direction of the fan axis X1, and a projection of the holding portion 2071 on the rotation plane of the axial-flow fan 202 falls within a range of a projection of the air duct portion 206 on the rotation plane. In this case, the volume of the garden blower in an up-down direction is smaller, and the center of gravity G of the garden blower is closer to the palm of a user for holding, so that the operation is more labor-saving.

FIG. 14 to FIG. 16 are schematic diagrams illustrating that a user operates a garden blower to which a motor 103 is applied and a user operates a conventional garden blower on the market. The garden blower provided in this application has a small volume and is more convenient for a user to operate.

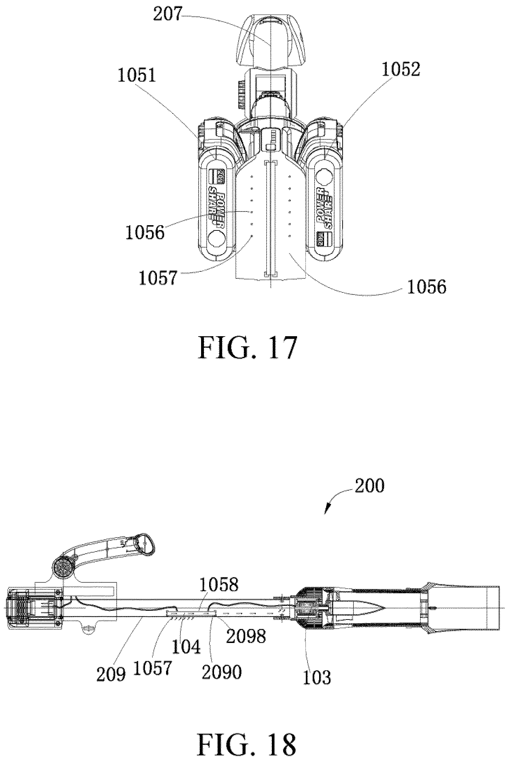

FIG. 17 illustrates a feasible arrangement manner of the control board 104. Specifically, the control board (not shown) is placed on the rear end of the extension rod 209. A battery pack mounting portion corresponding to the first battery pack 1051 and a battery pack mounting portion corresponding to the second battery pack 1052 are joined and connected to form a sole portion 1056. The sole portion 1056 includes a hollow accommodating portion for accommodating the control board. The sole portion 1056 is provided with a heat dissipation airflow inlet 1057, and the extension rod is provided with a heat dissipation airflow outlet. The heat dissipation airflow inlet 1057 and the heat dissipation airflow outlet are respectively located on two sides of the control board. In this way, external air can be introduced into the accommodating portion of the sole portion 1056 through the heat dissipation airflow inlet, flow through the control board and the hollow extension rod 209, and finally flow to the air duct portion 206 from the heat dissipation airflow outlet, thereby dissipating heat for the control board.

FIG. 18 illustrates another feasible arrangement manner of the control board 104. The control board 104 is accommodated in a hollow cavity of the extension rod 209. Specifically, the cavity of the extension rod 209 is provided with an accommodating portion 2098 for accommodating the control board 104. The accommodating portion 2098 is provided with an accommodating cavity 2090 for accommodating the control board 104, and a heat dissipation airflow inlet 1057 and a heat dissipation airflow outlet 1058 that are in communication with external air. The heat dissipation airflow outlet 1058 faces the cavity of the extension rod 209.

In the foregoing implementation, the accommodating portion and the air duct portion 206 are spaced apart in the longitudinal direction, and the heat dissipation airflow outlet is arranged in communication with the air duct portion 206. To ensure that the garden blower 200 has a small size in the longitudinal direction, a projection of the control board in a plane perpendicular to an axial direction of the fan is located within a range of a projection of the air inlet on the plane perpendicular to axial direction of the fan. To reduce the airflow loss, the heat dissipation airflow outlet is arranged facing the axial-flow fan, and an airflow flows out from the heat dissipation airflow outlet along a straight path and enters the air duct portion 206.

## Claims

1. A garden blower(200) capable of gathering scattered foreign objects, the garden blower(200) comprising:
an extension rod(209), extending a preset distance along a longitudinal direction;
an air duct portion(206), wherein the air duct portion(206) is provided respectively with an air inlet(2061) and an air outlet(2062) that are in communication with the outside;
a motor(103), configured to provide a driving force for the garden blower(200);
a power supply, configured to provide energy for the motor(103);
a fan(202), disposed inside the air duct portion(206) and driven by the motor(103) to rotate around a fan axis and generate an airflow; and
an operating handle(207), provided for a user to hold during operation, wherein the operating handle(207) and the air duct portion(206) are spaced apart from each other in the longitudinal direction and are disposed on two ends of the extension rod(209), wherein
a ratio of a length of the air duct portion(206) in the longitudinal direction to a length of the entire garden blower(200) in the longitudinal direction is less than or equal to 60%, **characterized in that**, in a state in which the power supply is not combined, a weight of the garden blower(200) does not exceed 2 kg,
and **in that** the garden blower(200) comprises an accommodating portion(2098) and a control board(104) that is electrically connected to the motor(103) and that is placed inside the accommodating portion(2098), the accommodating portion(2098) and the air duct portion(206) are spaced apart in the longitudinal direction, the accommodating portion(2098) comprises a heat dissipation airflow inlet(1057) and a heat dissipation airflow outlet(1058) that are in airflow communication, the heat dissipation airflow outlet(1058) is in communication with the air duct portion(206), and a projection of the control board(104) on a plane perpendicular to an axial direction of the fan(202) is located within a range of a projection of the air inlet(2061) on the plane perpendicular to the axial direction of the fan(202).

2. The garden blower(200) according to claim 1, wherein the length of the air duct portion(206) is not greater than 500 mm, and a maximum cross-sectional area of the air duct portion(206) in a direction perpendicular to the longitudinal direction is less than or equal to 65x10² mm² and greater than or equal to 22x10² mm².

3. The garden blower(200) according to claim 1, wherein a diameter of the motor(103) is not greater than 45 mm; or a diameter of the fan(202) is greater than or equal to 32 mm and less than or equal to 67 mm.

4. The garden blower(200) according to claim 1, wherein in a state in which the power supply is not combined, the weight of the garden blower(200) is not greater than 1.5 kg.

5. The garden blower(200) according to claim 1, wherein an air volume provided by the garden blower(200) is not less than 300 cfm, and an air speed provided by the garden blower(200) is not lower than 130 mph; and a rotational speed of the motor(103) is configured to be higher than 35000 rpm and lower than or equal to 80000 rpm.

6. The garden blower(200) according to claim 1, wherein a rotational speed of the motor(103) is configured to be higher than 35000 rpm and lower than or equal to 100000 rpm in a manner in which a ratio of a maximum output power of the motor(103) connected to the garden blower(200) to the weight of the garden blower(200) that is not combined with the power supply is not less than 400 W/kg.

7. The garden blower(200) according to claim 1, wherein a maximum output power of the motor(103) is 600 W to 1600 W.

8. The garden blower(200) according to claim 1, wherein a rotational speed of the motor(103) is configured to be higher than 35000 rpm and lower than or equal to 80000 rpm in a manner in which a ratio of a maximum air speed of the garden blower(200) to a diameter of the fan(202) is not less than 2.5 mph/mm, and the weight of the garden blower(200) that is not combined with the power supply is not greater than 1.5 kg.

9. The garden blower(200) according to claim 1, wherein the motor(103) is a coreless motor, and a stator(1031) and a rotor(1032) are disposed in the coreless motor, wherein the stator(1031) comprises a casing(1033), a stator lamination stack(1034), and a winding coil(1035), the stator lamination stack(1034) comprises a plurality of annular magnetic conductive sheets, and the winding coil(1035) is directly wound by an enameled wire and forms a cylindrical shape to accommodate the rotor(1032); and the rotor(1032) comprises a rotating shaft(1036) and a magnetic ring(1037) disposed on a periphery of the rotating shaft(1036).

10. The garden blower(200) according to claim 1, wherein the power supply comprises at least one battery pack(105) configured to provide energy for the motor(103); and optionally, the garden blower(200) further comprises a flow guiding cone(2064) and stationary blades(2065) that are disposed inside the air duct portion(206) and configured to guide an airflow to move toward the air outlet(2062); the air duct portion(206), the motor(103), the fan(202), the flow guiding cone(2064), and the stationary blades(2065) are defined as a first assembly located on one end of the extension rod(209) ,and the battery pack(105) is defined as a second assembly located on the other end of the extension rod(209); and a ratio of a weight of the second assembly to a weight of the first assembly does not exceed 1.5.

11. The garden blower(200) according to claim 10, wherein a ratio of the weight of the first assembly to a total weight of the garden blower(200) in which the battery pack(105) is mounted is not greater than 0.5; or the weight of the first assembly is less than or equal to 1.2 kg.

12. The garden blower(200) according to claim 1, wherein the air duct portion(206) comprises a main air blowing tube(2063) and an auxiliary air blowing tube(2066) disposed in communication with the main air blowing tube(2063), the air inlet(2061) is formed on an end of the main air blowing tube(2063), and the other end of the main air blowing tube(2063) is provided with a main air blowing port(2067) opposite to the air inlet(2061), the auxiliary air blowing tube(2066) is provided with an auxiliary air inlet(2068) in communication with the main air blowing port(2067) and a nozzle located on a front end of the auxiliary air inlet(2068) in the longitudinal direction, the nozzle forms the air outlet(2062), and there is a gap(2060) between the main air blowing port(2067) and the auxiliary air inlet(2068), so that an external airflow can enter the auxiliary air blowing tube(2066) from the gap(2060); and optionally, an airflow diffused from the air inlet(2061) to the air outlet(2062) comprises a high-speed region surrounding a rotation axis of the fan(202) and a low-speed region on a periphery of the high-speed region, the high-speed region flowing outward from the air outlet(2062) is defined as a high-speed wake region, and a ratio of a length of the high-speed wake region that extends outward beyond the air outlet(2062) to a length of the auxiliary air blowing tube(2066) is set to between 1.1 and 1.5 based on configurations that a rotational speed of the motor(103) is higher than 35000 rpm and lower than or equal to 120000 rpm, and the length of the auxiliary air blowing tube(2066) is greater than or equal to 100 mm and less than or equal to 160 mm.

13. The garden blower(200) according to claim 12, wherein the garden blower(200) has a first operating mode in which external air enters from the air inlet(2061) and is blown outward from the main air blowing port(2067) and a second operating mode in which external air enters from the air inlet(2061) and is blown outward from the air outlet(2062), the garden blower(200) selectively operates in the first operating mode or the second operating mode, the garden blower(200) can provide an air speed not lower than 130 mph in the first operating mode, and the garden blower(200) can provide an air volume not less than 300 cfm in the second operating mode.

14. The garden blower(200) according to claim 1, wherein the heat dissipation airflow outlet(1058) is arranged facing the fan(202), and an airflow flows out from the heat dissipation airflow outlet(1058) along a straight path and enters the air duct portion(206).

## Patentansprüche

1. Gartenbläser(200), der in der Lage ist, verstreute Fremdobjekte anzusammeln, der Gartenbläser(200) umfassend:
eine Verlängerungsstange(209), die sich über eine voreingestellte Distanz entlang einer Längsrichtung erstreckt;
einen Luftkanalabschnitt(206), wobei der Luftkanalabschnitt(206) jeweils mit einem Lufteinlass(2061) und einem Luftauslass(2062) bereitgestellt ist, die mit der Außenseite in Verbindung stehen;
einen Motor(103), der konfiguriert ist, um eine Antriebskraft für den Gartenbläser(200) bereitzustellen;
eine Leistungsversorgung, die konfiguriert ist, um Energie für den Motor(103) bereitzustellen;
einen Lüfter(202), der in dem Luftkanalabschnitt(206) eingerichtet ist und durch den Motor(103) angetrieben wird, um sich um eine Lüfterachse zu drehen und einen Luftstrom zu erzeugen; und
ein Betätigungsgriff(207), der bereitgestellt ist, um von einem Benutzer während des Betriebs gehalten zu werden, wobei der Betätigungsgriff(207) und der Luftkanalabschnitt(206) in der Längsrichtung voneinander beabstandet sind und an zwei Enden der Verlängerungsstange(209) eingerichtet sind, wobei
ein Verhältnis einer Länge des Luftkanalabschnitts(206) in der Längsrichtung zu einer Länge des gesamten Gartenbläsers(200) in der Längsrichtung kleiner als oder gleich 60 % ist, **dadurch gekennzeichnet, dass** in einem Zustand, in dem die Leistungsversorgung nicht kombiniert ist, ein Gewicht des Gartenbläsers(200) 2 kg nicht überschreitet,
und dadurch, dass der Gartenbläser(200) einen Aufnahmeabschnitt(2098) und eine Schalttafel(104) umfasst, die mit dem Motor(103) elektrisch verbunden ist, und die im Inneren des Aufnahmeabschnitts(2098) platziert ist, wobei der Aufnahmeabschnitt(2098) und der Luftkanalabschnitt(206) in der Längsrichtung beabstandet sind, der Aufnahmeabschnitt(2098) einen Wärmeabführungsluftstromeinlass(1057) und einen Wärmeabführungsluftstromauslass(1058) umfasst, die in Luftstromverbindung stehen, der Wärmeabführungsluftstromauslass(1058) mit dem Luftkanalabschnitt(206) in Verbindung steht, und eine Projektion der Schalttafel(104) auf einer Ebene senkrecht zu einer axialen Richtung des Lüfters(202) sich innerhalb eines Bereichs einer Projektion des Lufteinlasses(2061) auf der Ebene senkrecht zu der axialen Richtung des Lüfters(202) befindet.

2. Gartenbläser(200) nach Anspruch 1, wobei die Länge des Luftkanalabschnitts(206) nicht größer als 500 mm ist und eine maximale Querschnittsfläche des Luftkanalabschnitts(206) in einer Richtung senkrecht zu der Längsrichtung kleiner als oder gleich 65x10² mm² und größer als oder gleich 22x10² mm² ist.

3. Gartenbläser(200) nach Anspruch 1, wobei ein Durchmesser des Motors(103) nicht größer als 45 mm ist; oder ein Durchmesser des Lüfters(202) größer als oder gleich 32 mm und kleiner als oder gleich 67 mm ist.

4. Gartenbläser(200) nach Anspruch 1, wobei in einem Zustand, in dem die Leistungsversorgung nicht kombiniert ist, das Gewicht des Gartenbläsers(200) nicht größer als 1,5 kg ist.

5. Gartenbläser(200) nach Anspruch 1, wobei ein durch das Gartenbläser(200) bereitgestelltes Luftvolumen nicht weniger als 300 cfm beträgt und eine durch den Gartenbläser(200) bereitgestellte Luftgeschwindigkeit nicht geringer als 130 mph ist; und eine Drehzahl des Motors(103) konfiguriert ist, um höher als 35000 U/min und geringer als oder gleich 80000 U/min zu sein.

6. Gartenbläser(200) nach Anspruch 1, wobei eine Drehzahl des Motors(103) konfiguriert ist, um höher als 35000 U/min und geringer als oder gleich 100000 U/min zu sein, auf eine Weise, in der ein Verhältnis einer maximalen Ausgangsleistung des mit dem Gartenbläser(200) verbundenen Motors(103) zu dem Gewicht des Gartenbläsers(200), das nicht mit der Leistungsversorgung kombiniert ist, nicht weniger als 400 W/kg beträgt.

7. Gartenbläser(200) nach Anspruch 1, wobei eine maximale Ausgangsleistung des Motors(103) 600 W bis 1600 W beträgt.

8. Gartenbläser(200) nach Anspruch 1, wobei eine Drehzahl des Motors(103) konfiguriert ist, um höher als 35000 U/min und geringer als oder gleich 80000 U/min zu sein, auf eine Weise, in der ein Verhältnis einer maximalen Luftgeschwindigkeit des Gartenbläsers(200) zu einem Durchmesser des Lüfters(202) nicht weniger als 2,5 mph/mm beträgt, und das Gewicht des Gartenbläsers(200), das nicht mit der Leistungsversorgung kombiniert ist, nicht größer als 1,5 kg ist.

9. Gartenbläser(200) nach Anspruch 1, wobei der Motor(103) ein kernloser Motor ist, und ein Stator(1031) und ein Rotor(1032) in dem kernlosen Motor eingerichtet sind, wobei der Stator(1031) ein Gehäuse(1033), einen Statorlaminierungsstapel(1034) und eine Wicklungsspule(1035) umfasst, der Statorlaminierungsstapel(1034) eine Vielzahl von ringförmigen magnetisch leitfähigen Blechen umfasst, und die Wicklungsspule(1035) direkt durch einen Lackdraht gewickelt ist und eine zylindrische Form ausbildet, um den Rotor(1032) aufzunehmen; und der Rotor(1032) eine Drehwelle(1036) und einen magnetischen Ring(1037), der an einem Umfang der Drehwelle(1036) eingerichtet ist, umfasst.

10. Gartenbläser(200) nach Anspruch 1, wobei die Leistungsversorgung mindestens einen Akkupack(105) umfasst, der konfiguriert ist, um Energie für den Motor(103) bereitzustellen; und optional der Gartenbläser(200) ferner einen Strömungsleitkegel(2064) und stationäre Schaufeln(2065), die innerhalb des Luftkanalabschnitts(206) eingerichtet und konfiguriert sind, um einen Luftstrom zu leiten, um sich zu dem Luftauslass(2062) hin zu bewegen, umfasst; der Luftkanalabschnitt(206), der Motor(103), der Lüfter(202), der Strömungsleitkegel(2064) und die stationären Schaufeln(2065) als eine erste Baugruppe definiert sind, die sich an einem Ende der Verlängerungsstange(209) befindet, und der Akkupack(105) als eine zweite Baugruppe definiert ist, die sich an dem anderen Ende der Verlängerungsstange(209) befindet; und ein Verhältnis eines Gewichts der zweiten Baugruppe zu einem Gewicht der ersten Baugruppe 1,5 nicht überschreitet.

11. Gartenbläser(200) nach Anspruch 10, wobei ein Verhältnis des Gewichts der ersten Baugruppe zu einem Gesamtgewicht des Gartenbläsers(200), in dem der Akkupack(105) montiert ist, nicht größer als 0,5 ist; oder das Gewicht der ersten Baugruppe kleiner als oder gleich 1,2 kg ist.

12. Gartenbläser(200) nach Anspruch 1, wobei der Luftkanalabschnitt(206) ein Hauptluftblasrohr(2063) und ein Hilfsluftblasrohr(2066), das in Verbindung mit dem Hauptluftblasrohr(2063) eingerichtet ist, umfasst, der Lufteinlass(2061) an einem Ende des Hauptluftblasrohrs(2063) ausgebildet ist, und das andere Ende des Hauptluftblasrohrs(2063) mit einem Hauptluftblasanschluss (2067) gegenüber dem Lufteinlass (2061) bereitgestellt ist; das Hilfsluftblasrohr(2066) mit einem Hilfslufteinlass(2068) in Verbindung mit dem Hauptluftblasanschluss (2067) und einer Düse, die sich an einem vorderen Ende des Hilfslufteinlasses(2068) in der Längsrichtung befindet, bereitgestellt ist, die Düse den Luftauslass(2062) ausbildet, und ein Spalt(2060) zwischen dem Hauptluftblasanschluss (2067) und dem Hilfslufteinlass(2068) besteht, sodass ein externer Luftstrom in das Hilfsluftblasrohr(2066) aus dem Spalt(2060) eintreten kann; und optional ein von dem Lufteinlass(2061) zu dem Luftauslass(2062) diffundierter Luftstrom einen Hochgeschwindigkeitsbereich, der eine Drehachse des Lüfters(202) umgibt, und einen Niedergeschwindigkeitsbereich an einem Umfang des Hochgeschwindigkeitsbereichs umfasst, wobei der aus dem Luftauslass(2062) nach außen strömende Hochgeschwindigkeitsbereich als ein Hochgeschwindigkeits-Nachlaufbereich definiert ist, und ein Verhältnis einer Länge des Hochgeschwindigkeits-Nachlaufbereichs, der sich über den Luftauslass(2062) hinaus nach außen erstreckt, zu einer Länge des Hilfsluftblasrohrs(2066) auf zwischen 1,1 und 1,5 eingestellt ist, basierend auf Konfigurationen, dass eine Drehzahl des Motors(103) höher als 35000 U/min und geringer als oder gleich 120000 U/min ist, und die Länge des Hilfsluftblasrohrs(2066) größer als oder gleich 100 mm und kleiner als oder gleich 160 mm ist.

13. Gartenbläser(200) nach Anspruch 12, wobei der Gartenbläser(200) einen ersten Betriebsmodus, in dem Außenluft aus dem Lufteinlass(2061) eintritt und aus dem Hauptluftblasanschluss(2067) nach außen geblasen wird, und einen zweiten Betriebsmodus aufweist, in dem Außenluft aus dem Lufteinlass(2061) eintritt und aus dem Luftauslass(2062) nach außen geblasen wird, wobei der Gartenbläser(200) wahlweise in dem ersten Betriebsmodus oder dem zweiten Betriebsmodus arbeitet, der Gartenbläser(200) in dem ersten Betriebsmodus eine Luftgeschwindigkeit von nicht geringer als 130 mph bereitstellen kann und der Gartenbläser(200) in dem zweiten Betriebsmodus ein Luftvolumen von nicht weniger als 300 cfm bereitstellen kann.

14. Gartenbläser(200) nach Anspruch 1, wobei der Wärmeabführungsluftstromauslass(1058) dem Lüfter(202) zugewandt angeordnet ist und ein Luftstrom aus dem Wärmeabführungsluftstromauslass(1058) entlang eines geraden Weges herausströmt und in den Luftkanalabschnitt(206) eintritt.

## Revendications

1. Souffleur de jardin (200) capable de rassembler des objets étrangers dispersés, le souffleur de jardin (200) comprenant :
une tige d'extension (209), s'étendant sur une distance prédéfinie le long d'une direction longitudinale ;
une partie de conduit d'air (206), dans lequel la partie de conduit d'air (206) est fournie respectivement avec une entrée d'air (2061) et une sortie d'air (2062) qui sont en communication avec l'extérieur ;
un moteur (103), configuré pour fournir une force d'entraînement pour le souffleur de jardin (200) ;
une alimentation électrique, configurée pour fournir de l'énergie au moteur (103) ;
un ventilateur (202), disposé à l'intérieur de la partie de conduit d'air (206) et entraîné par le moteur (103) pour entrer en rotation autour d'un axe de ventilateur et générer un flux d'air ; et
une poignée de fonctionnement (207), fournie pour être tenue par un utilisateur pendant le fonctionnement, dans lequel la poignée de fonctionnement (207) et la partie de conduit d'air (206) sont espacées l'une de l'autre dans la direction longitudinale et sont disposées sur deux extrémités de la tige d'extension (209), dans lequel
un rapport d'une longueur de la partie de conduit d'air (206) dans la direction longitudinale à une longueur du souffleur de jardin (200) entier dans la direction longitudinale est inférieur ou égal à 60 %, **caractérisé en ce que**, dans un état dans lequel l'alimentation électrique n'est pas combinée, un poids du souffleur de jardin (200) ne dépasse pas 2 kg,
et **en ce que** le souffleur de jardin (200) comprend une partie de réception (2098) et une carte de commande (104) qui est reliée électriquement au moteur (103) et qui est placée à l'intérieur de la partie de réception (2098), la partie de réception (2098) et la partie de conduit d'air (206) sont espacées dans la direction longitudinale, la partie de réception (2098) comprend une entrée de flux d'air de dissipation de chaleur (1057) et une sortie de flux d'air de dissipation de chaleur (1058) qui sont en communication de flux d'air, la sortie de flux d'air de dissipation de chaleur (1058) est en communication avec la partie de conduit d'air (206), et une saillie de la carte de commande (104) sur un plan perpendiculaire à une direction axiale du ventilateur (202) est située dans une plage d'une saillie de l'entrée d'air (2061) sur le plan perpendiculaire à la direction axiale du ventilateur (202).

2. Souffleur de jardin (200) selon la revendication 1, dans lequel la longueur de la partie de conduit d'air (206) n'est pas supérieure à 500 mm, et une superficie de section transversale maximale de la partie de conduit d'air (206) dans une direction perpendiculaire à la direction longitudinale est inférieure ou égale à 65x10² mm² et supérieure ou égale à 22x10² mm².

3. Souffleur de jardin (200) selon la revendication 1, dans lequel un diamètre du moteur (103) n'est pas supérieur à 45 mm ; ou un diamètre du ventilateur (202) est supérieur ou égal à 32 mm et inférieur ou égal à 67 mm.

4. Souffleur de jardin (200) selon la revendication 1, dans lequel dans un état dans lequel l'alimentation électrique n'est pas combinée, le poids du souffleur de jardin (200) n'est pas supérieur à 1,5 kg.

5. Souffleur de jardin (200) selon la revendication 1, dans lequel un volume d'air fourni par le souffleur de jardin (200) n'est pas inférieur à 300 pi³/min, et une vitesse d'air fournie par le souffleur de jardin (200) n'est pas inférieure à 130 mph ; et une vitesse de rotation du moteur (103) est configurée pour être supérieure à 35 000 tr/min et inférieure ou égale à 80 000 tr/min.

6. Souffleur de jardin (200) selon la revendication 1, dans lequel une vitesse de rotation du moteur (103) est configurée pour être supérieure à 35 000 tr/min et inférieure ou égale à 100 000 tr/min de manière à ce qu'un rapport d'une puissance de sortie maximale du moteur (103) reliée au souffleur de jardin (200) au poids du souffleur de jardin (200) qui n'est pas combiné à l'alimentation électrique ne soit pas inférieur à 400 W/kg.

7. Souffleur de jardin (200) selon la revendication 1, dans lequel une puissance de sortie maximale du moteur (103) est de 600 W à 1 600 W.

8. Souffleur de jardin (200) selon la revendication 1, dans lequel une vitesse de rotation du moteur (103) est configurée pour être supérieure à 35 000 tr/min et inférieure ou égale à 80 000 tr/min de manière à ce qu'un rapport d'une vitesse d'air maximale du souffleur de jardin (200) à un diamètre du ventilateur (202) ne soit pas inférieur à 2,5 mph/mm, et le poids du souffleur de jardin (200) qui n'est pas combiné avec l'alimentation électrique n'est pas supérieur à 1,5 kg.

9. Souffleur de jardin (200) selon la revendication 1, dans lequel le moteur (103) est un moteur sans noyau, et un stator (1031) et un rotor (1032) sont disposés dans le moteur sans noyau, dans lequel le stator (1031) comprend un boîtier (1033), un empilement de tôles de stator (1034), et une bobine d'enroulement (1035), l'empilement de tôles de stator (1034) comprend une pluralité de feuilles conductrices magnétiques annulaires, et la bobine d'enroulement (1035) est directement enroulée par un fil émaillé et forme une forme cylindrique pour recevoir le rotor (1032) ; et le rotor (1032) comprend un arbre rotatif (1036) et une bague magnétique (1037) disposée sur une périphérie de l'arbre rotatif (1036).

10. Souffleur de jardin (200) selon la revendication 1, dans lequel l'alimentation électrique comprend au moins un bloc-batterie (105) configuré pour fournir de l'énergie au moteur (103) ; et éventuellement, le souffleur de jardin (200) comprend en outre un cône de guidage de flux (2064) et des aubes fixes (2065) qui sont disposés à l'intérieur de la partie de conduit d'air (206) et configurés pour guider un flux d'air à se déplacer vers la sortie d'air (2062) ; la partie de conduit d'air (206), le moteur (103), le ventilateur (202), le cône de guidage de flux (2064), et les aubes fixes (2065) sont définis en guise de premier ensemble situé sur une extrémité de la tige d'extension (209), et le bloc-batterie (105) est défini en guise de second ensemble situé sur l'autre extrémité de la tige d'extension (209) ; et un rapport d'un poids du second ensemble à un poids du premier ensemble ne dépasse pas 1,5.

11. Souffleur de jardin (200) selon la revendication 10, dans lequel un rapport du poids du premier ensemble à un poids total du souffleur de jardin (200) dans lequel le bloc-batterie (105) est monté n'est pas supérieur à 0,5 ; ou le poids du premier ensemble est inférieur ou égal à 1,2 kg.

12. Souffleur de jardin (200) selon la revendication 1, dans lequel la partie de conduit d'air (206) comprend un tube de soufflage d'air principal (2063) et un tube de soufflage d'air auxiliaire (2066) disposé en communication avec le tube de soufflage d'air principal (2063), l'entrée d'air (2061) est formée sur une extrémité du tube de soufflage d'air principal (2063), et l'autre extrémité du tube de soufflage d'air principal (2063) est fournie avec un orifice de soufflage d'air principal (2067) opposé à l'entrée d'air (2061), le tube de soufflage d'air auxiliaire (2066) est fourni avec une entrée d'air auxiliaire (2068) en communication avec l'orifice de soufflage d'air principal (2067) et une buse située sur une extrémité avant de l'entrée d'air auxiliaire (2068) dans la direction longitudinale, la buse forme la sortie d'air (2062), et il y a un espace (2060) entre l'orifice de soufflage d'air principal (2067) et l'entrée d'air auxiliaire (2068), de sorte qu'un flux d'air externe peut entrer dans le tube de soufflage d'air auxiliaire (2066) depuis l'espace (2060) ; et éventuellement, un flux d'air diffusé depuis l'entrée d'air (2061) jusqu'à la sortie d'air (2062) comprend une région à grande vitesse entourant un axe de rotation du ventilateur (202) et une région à faible vitesse sur une périphérie de la région à grande vitesse, la région à grande vitesse circulant vers l'extérieur depuis la sortie d'air (2062) est définie en guise de région de sillage à grande vitesse, et un rapport d'une longueur de la région de sillage à grande vitesse qui s'étend vers l'extérieur au-delà de la sortie d'air (2062) à une longueur du tube de soufflage d'air auxiliaire (2066) est défini entre 1,1 et 1,5 en fonction de configurations selon lesquelles une vitesse de rotation du moteur (103) est supérieure à 35 000 tr/min et inférieure ou égale à 120 000 tr/min, et la longueur du tube de soufflage d'air auxiliaire (2066) est supérieure ou égale à 100 mm et inférieure ou égale à 160 mm.

13. Souffleur de jardin (200) selon la revendication 12, dans lequel le souffleur de jardin (200) a un premier mode de fonctionnement dans lequel de l'air externe entre depuis l'entrée d'air (2061) et est soufflé vers l'extérieur depuis l'orifice de soufflage d'air principal (2067) et un second mode de fonctionnement dans lequel de l'air externe entre depuis l'entrée d'air (2061) et est soufflé vers l'extérieur depuis la sortie d'air (2062), le souffleur de jardin (200) fonctionne sélectivement dans le premier mode de fonctionnement ou le second mode de fonctionnement, le souffleur de jardin (200) peut fournir une vitesse d'air non inférieure à 130 mph dans le premier mode de fonctionnement, et le souffleur de jardin (200) peut fournir un volume d'air non inférieur à 300 pi³/min dans le second mode de fonctionnement.

14. Souffleur de jardin (200) selon la revendication 1, dans lequel la sortie de flux d'air de dissipation de chaleur (1058) est agencée pour faire face au ventilateur (202), et un flux d'air circule depuis la sortie de flux d'air de dissipation de chaleur (1058) le long d'un trajet rectiligne et entre dans la partie de conduit d'air (206).
